# EUROPÄISCHE PATENTSCHRIFT

(11) **EP 2 516 495 B1**
(45) Veröffentlichungstag und Bekanntmachung des Hinweises auf die Patenterteilung: **29.07.2015**
(21) Anmeldenummer: 10794892.9
(22) Anmeldetag: 16.12.2010
(51) Int. Cl.: C08G 18/08, C08G 18/48, C08G 18/63, C08G 18/66, C08G 101/00, C08L 101/02, C08K 5/09

(54) **ZUSAMMENSETZUNG UMFASSEND STABILE POLYOLMISCHUNGEN**
COMPOSITION COMPRISING STABLE POLYOL MIXTURES
COMPOSITION CONTENANT DES MÉLANGES DE POLYOL STABLES

(30) Priorität: 22.12.2009 EP 09015857
(43) Veröffentlichungstag der Anmeldung: 31.10.2012
(73) Patentinhaber: BYK-Chemie GmbH, 46483 Wesel (DE)
(72) Erfinder: NAGELSDIEK, René, 46499 Hamminkeln (DE); GÖBELT, Bernd, 46487 Wesel (DE); HOFFMANN, Ralf, 46485 Wesel (DE); OMEIS, Jürgen, 46286 Dorsten-Lembeck (DE); GREEFRATH, Dorothée, 45481 Mülheim an der Ruhr (DE); MUTH, Martin, 46236 Bottrop (DE)
(74) Vertreter: Kutzenberger, Helga
(86) Internationale Anmeldenummer: PCT/EP2010/007671
(87) Internationale Veröffentlichungsnummer: WO 2011/085775

(56) Entgegenhaltungen:
- EP-A1- 0 493 120
- EP-A1- 0 909 792
- DE-A1-102008 007 713
- US-A- 3 489 698

## Beschreibung

Die vorliegende Erfindung betrifft einphasige, flüssige Zusammensetzungen umfassend wenigstens zwei miteinander unverträgliche, isocyanatreaktive Polyolkomponenten und als Vermittleradditiv wenigstens ein, die Entmischung zwischen den Polyolkomponenten verhinderndes bzw. verzögerndes Copolymeres, das aus bestimmten nachfolgend aufgeführten Struktureinheiten aufgebaut ist, von denen bestimmte Struktureinheiten keine sauren funktionellen Gruppen und bestimmte Struktureinheiten, wenigstens eine saure funktionelle Gruppe aufweisen und diese ggf. zumindest teilweise mit mindestens einer, wenigstens eine basische Gruppe aufweisenden, bevorzugt organischen Verbindung versalzen sind , sowie deren Verwendung zur Herstellung von Polyurethanen bzw. entsprechender Polyurethan-Artikel.

Polyurethane gehören zu den Werkstoffen, die in unterschiedlichster Form vielfältige Anwendung finden. Dazu können sie in Form von Hart- oder Weichschäumen oder kompakt in Beschichtungen, Adhäsionsmitteln, Dichtungsmasse oder Elastomeren (sog. CASE-Anwendungen) eingesetzt werden. Um das für die jeweilige Anwendung erforderliche, bestmögliche Eigenschaftsprofil des zum Einsatz kommenden Polyurethans zu erreichen, ist eine sorgfältige Auswahl der Ausgangskomponenten erforderlich.

Polyurethane werden durch Umsetzung von Polyolen mit Polyisocyanaten hergestellt. Während die Auswahl der im großtechnischen Maßstab zur Verfügung stehenden Polyisocyanate beschränkt ist, stehen bei den Polyolen eine Vielzahl möglicher Komponenten zur Verfügung, die eingesetzt werden können. Diese reicht von Polyetherpolyolen über Polyesterpolyole und hydroxyfunktionelle Polybutadiene bis zu niedermolekularen Polyolen, welche zum Beispiel als Kettenverlängerer oder Kettenvernetzer zum Einsatz kommen.

Üblicherweise wird bei der Herstellung eines Polyurethans nicht nur ein bestimmtes Polyol mit Polyisocyanaten umgesetzt, sondern eine Mischung verschiedener Polyole, die nieder- oder höhermolekular sein können. In vielen Fällen ist eine Mischung der zum Einsatz kommenden Polyole nicht stabil, sondern neigt zumindest mit der Zeit zu einer Phasentrennung. Diese Entmischung wird beispielsweise durch unterschiedliche Molekulargewichte, unterschiedliche Monomerzusammensetzung, unterschiedliche Polarität und/oder einen unterschiedlichen strukturellen Aufbau wie z. B. einem statistischen bzw. blockartigen Aufbau oder einer linearen bzw. einer verzweigten Struktur der Polyole verursacht.

Weiterhin ist bekannt, dass die Entmischungsneigung in Gegenwart bestimmter Substanzen wie z. B. Wasser sogar noch verstärkt wird. Die Entmischung kann auch durch die Mitverwendung von Zusatz- und/oder Hilfsstoffen verursacht oder verstärkt werden oder durch das Vorliegen von mehr als 2 Polyolen.

Unabhängig von den Ursachen führt die Entmischungsneigung zu mannigfachen Problemen bei der Handhabung und Verarbeitung von solchen Polyolmischungen. So ist eine Lagerung oder ein Transport solcher Polyolmischungen oder ein Abmischen mit Hilfsstoffen selbst für kurze Zeiträume wegen der Separationsneigung zwischen den Polyolen in vielen Fällen nicht möglich. Daher muss vor der Verarbeitung solcher Polyolmischungen für eine homogene Verteilung der Polyolkomponenten durch eine neuerliche Durchmischung gesorgt werden. Dafür sind beim Polyurethanhersteller Investitionen in Mischanlagen notwendig, die außerdem zu einem erhöhten Energieaufwand führen. Hinzukommt noch, dass im Falle einer unzureichenden Durchmischung der Polyolkomponenten das Risiko besteht, dass das daraus hergestellte Polyurethan nicht das gewünschte Eigenschaftsprofil aufweist. Es hat daher nicht an Versuchen gefehlt, dieses Entmischungsproblem der Polyolkomponenten zumindest zu verbessern.

Als eine Möglichkeit, der Entmischung von unverträglichen Polyolkomponenten entgegenzuwirken, wurde in US 4,312,973 darin gesehen, die Struktur der unverträglichen Polyolkomponenten so zu verändern, dass sie miteinander ausreichend stabil vermischt bleiben.

Da aber mit der Veränderung der Polyolkomponenten letztendlich auch die Gefahr einer Veränderung des Eigenschaftsprofils der daraus hergestellten Polyurethane einhergeht, ist diese Lösung des Entmischungsproblems in vielen Fällen nicht anwendbar. Darüberhinaus sind die Polyurethanhersteller in den meisten Fällen keine Hersteller der zum Einsatz kommenden Polyolkomponenten, so dass sie gezwungen sind, mit den am Markt verfügbaren Polyolkomponenten das angestrebte Polyurethan-Eigenschaftsprofil zu erreichen.

Ein weiterer Versuch, das Entmischungsproblem bei unverträglichen Polyolkomponenten zu lösen, besteht gemäß dem Stande der Technik darin, eine zwischen den unverträglichen Polyolkomponenten verträglichkeitsvermittelnde Komponente mitzuverwenden, wodurch die Separationsneigung zwischen den unverträglichen Polyolkomponenten zumindest verlangsamt wird.

So wird in US 4,125,505 beschrieben, dass Polyalkylenoxide mit einem bestimmten Aufbau als eine der Polyolkomponenten mit einem an sich unverträglichen Kettenverlängerer, wie einem niedermolekularen Polyol, mit Hilfe von in Teilchenform vorliegenden Polymeren aus ungesättigten Monomeren wie z. B. aus Styrol/Acrylnitril Copolymeren, in ihrer Verträglichkeit verbessert werden können. Nachteilig für den Polyurethan-Hersteller ist dabei, dass aus nicht sofort weiter verwendeten Mischungen die dispergierten Polymerteilchen sedimentieren oder auf die mechanischen Eigenschaften der daraus hergestellten Polyurethane einen nicht gewollten Einfluss haben können.

In US 5,344,584 wird vorgeschlagen, einer Mischung von zwei isocyanatreaktiven Verbindungen, die normalerweise nicht miteinander mischbar sind, eine oberflächenaktive Verbindung zuzugeben, die als Carbonsäureester oder Carbonsäureamid saure Gruppen aufweist. Vorzugsweise leitet sich der Polycarbonsäureester von einer Hydroxycarbonsäure bzw. von einem ringgeöffneten Lacton ab. Die Zugabe der oberflächenaktiven Verbindung zu den an sich miteinander unverträglichen Polyolkomponenten wirkt zwar verträglichkeitsverbessernd, aber nicht immer in dem gewünschten Ausmaß. Außerdem sind diese Polycarbonsäureester aufgrund der möglichen Reaktivität ihrer sauren Gruppen auch nicht in allen Systemen einsetzbar. Einschränkungen sind auch bei der in US 4673696 offengelegten Verwendung von ethylehisch ungesättigten Esterolen als Verträglichkeitsvermittler zwischen kurzkettigen und langkettigen, isocyanatreaktiven Polyolkomponenten, die an sich miteinander unverträglich sind, zu erwarten. Dies resultiert insbesondere daraus, dass diese Mischungen nur für die Herstellung bestimmter Polyurethane eingesetzt werden können, bei denen die Mitverwendung der ethylenisch ungesättigten Esterole keine unerwünschten Nebenreaktionen erwarten lässt. Welterhin ist auch mit diesen Verträglichkeitsvermittlern eine Verträglichkeitsverbesserung nicht immer in dem gewünschten Ausmaß erzielbar.

In DE 10 2008 000 243 wird die Verwendung von bestimmten Urethan- und Harnstoffgruppen enthaltenden Polyethern als Mittel zu Kompatibilisierung von Polyolzusammensetzungen beschrieben. Auch mit diesen Verbindungen ist eine Verträglichkeitsverbesserung nicht immer in dem gewünschten Ausmaß möglich.

In DE 23 41 294 wird die Verwendung oberflächenaktiver, anorganische Materialien zur Verträglichkeitsverbesserung eines Polyolgemisches beschrieben. Diese festen Zusatzstoffe bergen das Risiko einer Sedimentation. Darüberhinaus stellen die dort bevorzugt verwendeten Materialien, wie Asbest, ein nicht unerhebliches Gesundheitsrisiko dar.

In US 2007/238800 werden Alkylphenolethoxylate als Zusatzstoffe für Polyolformulierungen auf Basis von speziellen Pflanzehöl-Polyolen beschrieben. Diese Emulgatoren sind nicht nur im Hinblick auf ihre gesundheitsschädigenden und ökotoxischen Eigenschaften als kritisch anzusehen, sondern bieten auch nicht in allen Fällen die ausreichenden stabilisierenden Eigenschaften für Polyol-Mischungen.

In US 7,223,890 B2 wird eine isocyanatreaktive Mischung beschrieben, die neben Wasser und einem DMC-katalysierten alkoxylierten Polyol eine die Wasserverträglichkeit dieser Mischung verbesserte Verbindung enthält, die Ethylenoxid-Einheiten aufweist. Als Beispiele für diese Verbindungen werden u. a. auch Blockcopolymere aus Ethylenoxid und Propylenoxid beschrieben.

In der Offenbarung des genannten US-Patents findet sich kein Hinweis auf eine Verträglichkeitsverbesserung von miteinander unverträglichen Polyolen.

Die Offenbarung von US 2006/0189704 befasst sich mit der Verträglichkeitsverbesserung, d. h. Verhinderung von Phasentrennung von Zusammensetzungen, die wenigstens ein Polyol, Wasser und ein mindestens drei Hydroxygruppen aufweisendes Alkoxylat von Verbindungen mit reaktivem Wasserstoff, wie z. B. von Glycerin, als verträglichkeitsverbessernde Mittel enthalten. Durch die Mitverwendung dieser verträglichkeitsverbessernden Mittel wird bei der Lagerung die Separation von Wasser und Polyol verhindert.

In US 2008/009209 wird eine härtbare Zusammensetzung beschrieben, welche eine Polysäure, ein oder mehrere Polyole sowie ein oder mehrere reaktive wasserabweisende Mittel enthält. Als wasserabweisendende Verbindungen werden u.a. Polyalkoxylate von Alkyl- und Alkenylaminen als Beispiele genannt. Diese bekannten wasserabweisenden, härtbaren Zusammensetzungen werden zur Beschichtung von Glasfasern oder Mineralwolle eingesetzt, wobei für das Verhältnis von Carboxylgruppen zu OH-Gruppen in dem Gemisch ein spezieller Bereich empfohlen wird. Eine Kompatibilisierung von Polyolmischungen ist nicht Gegenstand dieser veröffentlichten US-Anmeldung.

Weiterhin wird in US 5,668,187 B2 die Herstellung von Polyurethan-Hartschaum offenbart, wobei als Treibmittel eine wässrige Emulsion enthaltend ein Copolymer von verschiedenen ungesättigten Monomeren in emulgierter Form direkt bei der Reaktion von Polyol mit Polyisocyanat als weitere Reaktionskomponente zugegeben wird.

Aufgabe der vorliegenden Erfindung war es daher, die Nachteile des Standes der Technik zu beheben und die Entmischungsneigung von an sich unverträglichen oder unverträglich werdenden, isocyanatreaktiven Polyol-Komponeten im wesentlichen verursacht durch deren unterschiedlichen Aufbau, Polarität und/oder Molekulargewicht möglichst vollständig bis zu deren weiteren reaktiven Umsetzung zu Polyurethanen zu unterbinden.

Diese Aufgabe wird durch das zur Verfügung stellen der erfindungsgemäßen, eine lagerstabile Einphasigkeit aufweisende, flüssige Zusammensetzung umfassend
(1) 1 bis 99 Gew.% einer isocyanatreaktiven Polyol-Komponente,
(2) 1 bis 99 Gew.% wenistens einer weiteren mit der Polyol-Komponente (1) unverträglichen, isocyanatreaktiven PolyolKomponente,
(3) 0 bis 45 Gew.% wenigstens einer weiteren flüssigen Komponente aus der Gruppe der Zusatz- und/oder Hilfsstoffe und
(4) als Vermittleradditiv 0,1 bis 10 Gew.% wenigstens ein, die Einphasigkeit zwischen den Polyol Komponenten (1) und (2), und der ggf. vorhandenen Komponente (3) bewirkendes Copolymeres,
wobei die Gew.% der Komponenten (1) bis (4) jeweils bezogen sind auf 100 Gew.% der Zusammensetzung und die Zusammensetzung immer 100 Gew.% ergeben und die Summe der Anteile der Komponenten (1) und (2) immer wenigstens 50 Gew.% der Zusammensetzung betragen muss und
wobei das Copolymere (4) die folgenden Strukureinheiten I bis VII umfassen kann und aus wenistens einer der Struktureinheiten I bis III, die keine sauren funktionellen Gruppen aufweisen, und aus wenistens einer der Struktureinheiten IV bis VII, die wenigstens eine saure funktionelle Gruppe aufweisen, aufgebaut ist und im Copolymeren (4) das molare Verhältnis von sauren funktionellen Gruppen zu ggf. vorhandenen N-haltigen, basischen Gruppen und/oder entsprechenden quarternierten Gruppen des unversalzten Copolymeren (4) wenigstens 5:1 beträgt. 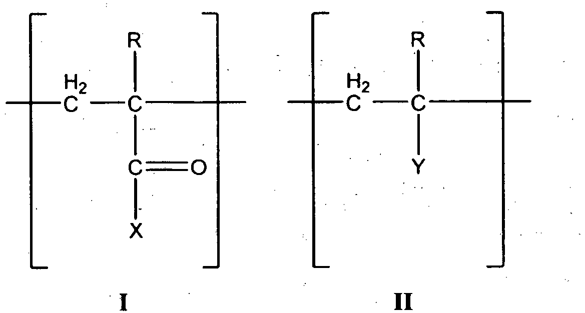 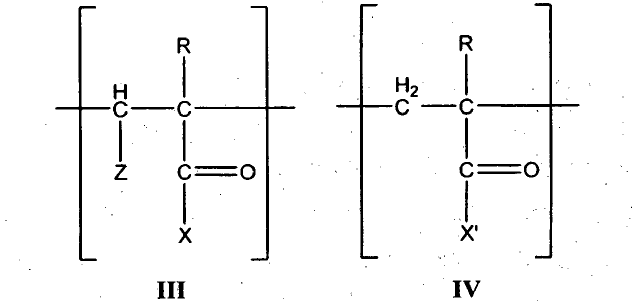 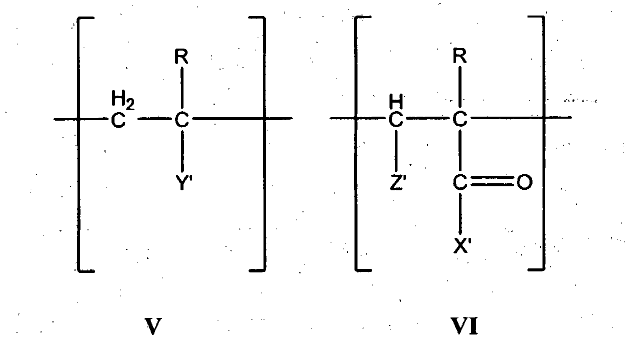 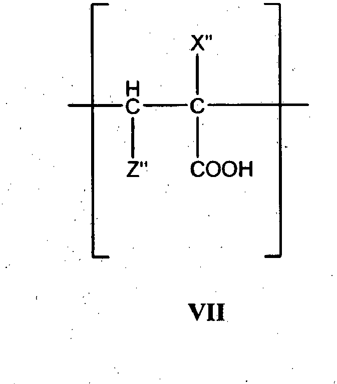 worin
R, gleich oder verschieden, für Wasserstoff oder einen ggf. verzweigten Alkylrest mit 1-5 C-Atomen steht,
X, gleich oder verschieden, für eine -OR¹, eine 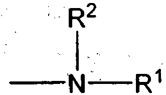 oder eine -NH₂ Gruppe steht, worin
   R¹, gleich oder verschieden, für einen ggf. verzweigten Alkylrest mit 1-12 C-Atomen, einen ggf. verzweigten Alkenylrest mit 1-12 C-Atomen, der ggf. funktionellen Gruppen mit Ausnahme saurer funktioneller Gruppen aufweisen kann, einen Cycloalkylrest mit 4-10 C-Atomen, einen aromatischen Rest mit 6-20 C-Atomen, wobei jeder dieser Reste ggfs. auch substituiert sein kann, aber keine saure funktionelle Gruppe aufweist, einen Polyether-Rest oder Polyester-Rest oder einen Polyether/Polyester-Rest steht, der jeweils keine saure Gruppen aufweist,
   R², gleich oder verschieden, für Wasserstoff steht oder die Bedeutung von R¹ hat.
Y für einen ggfs. substituierten, aromatischen, ggfs. wenigstens ein Heteroatom als Ringglied aufweisenden Rest mit 4-12 C-Atomen, einen Lactam-Rest mit 4-8 C-Atomen, einen über eine -O- bzw. 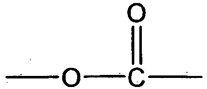 -Brücke verbundenen Polyether- bzw. Polyester-Rest oder eine 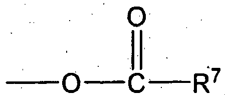 -Gruppe, worin
   R⁷ für einen Alkylrest mit 1-6 C-Atomen öder einen Cycloalkylrest mit 4-10 C-Atomen steht, wobei jeder dieser Reste mit funktionellen Gruppen mit Ausnahme saurer funktioneller Gruppen substituiert sein kann,
Z für eine -COOR¹ Gruppe, worin R¹ die vorstehend angegebene Bedeutung hat, oder
Z zusammen mit der Gruppe 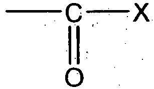 mit X in der Bedeutung einer Gruppe 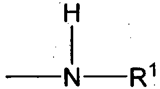 oder -NH₂ eine cyclische Imidgruppe bildet, deren Stickstoff ggf. mit einem Rest R¹ mit der vorstehend angegebenen Bedeutung substituiert sein kann,
X', gleich oder verschieden, für eine -OH-Gruppe, die ggf. als eine durch Versalzung mit einer der nachstehend aufgeführten, zur Versalzung eingesetzten, vorzugsweise organischen, basischen Verbindungen (5) versalzte Gruppe vorliegt, oder für eine -OR¹¹ Gruppe oder eine Gruppe 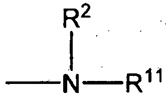 steht, worin
   R¹¹, gleich oder verschieden, für einen ggf. verzweigten Alkylrest mit 1-20 C-Atomen, einen ggf. verzweigten Alkenylrest mit 1-20 C-Atomen, einen Cycloalkylrest mit 4-10 C-Atomen, einen aromatischen Rest, wobei jeder dieser Reste neben wenigstens einer der nachstehend aufgeführten Säuregruppen ggfs. noch weiter substituiert sein kann,
   und R² die vorstehend genannte Bedeutung hat,
      einen Polyether-Rest, einen Polyester-Rest oder einen Polyether/Polyester-Rest steht,
      wobei jeder dieser Reste mindestens eine carbonsaure, sulfonsaure, phosphonsaure und/oder phosphorsaure Gruppe aufweist, die ggf. durch Versalzung mit einer der nachstehend aufgeführten, zur Versalzung eingesetzten, vorzugsweise organischen, basischen Verbindungen (5) als versalzte Gruppe vorliegt;
   Y für eine Phosphonsäuregruppe, Phosphorsäuregruppe, steht für ein lineares oder verzweigtes aliphatisches Radikal mit 1 bis 8 C-Atomen, für ein ggf. Heteroatome aufweisendes, aromatisches Radikal mit mindestens 5 Ringgliedern oder für ein gesättigtes oder ungesättigtes, ggf. Heteroatome aufweisendes, cycloaliphatisches Radikal mit mindestens 5 Ringgliedern steht, wobei jedes dieser Radikale mindestens eine carbonsaure, sulfonsaure, phosphonsaure und/oder phosphorsaure Gruppe aufweist, wobei die saure Gruppe ggf. durch Versalzung mit einer der nachstehend aufgeführten, zur Versalzung eingesetzten, vorzugsweise organischen, basischen Verbindungen (5) als versalzte Gruppe vorliegt oder für einen über eine -O- bzw. 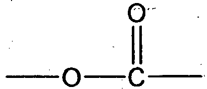 -Brücke verbundenen Polyether- bzw. Polyester-Rest oder eine 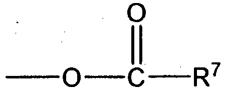 -Gruppe, worin
   R⁷ für einen ggfs. substituierten verzweigten oder unverzweigten Alkylrest mit 1-6 C-Atomen oder einen ggfs: substituierten-Cycloalkylrest mit 4-10 C-Atomen steht, wobei jeder der Polyether- bzw. Polyester-Reste bzw. jeder der Reste R⁷ mindestens eine carbonsaure, sulfonsaure, phosphonsaure und/oder phosphorsauren Gruppe aufweist, die ggf. durch Versalzung mit einer der nachstehend aufgeführten, zur Versalzung eingesetzten, vorzugsweise organischen, basischen Verbindungen (5) als versalzte Gruppe vorliegt;
Z', gleich oder verschieden von X', für eine Gruppierung mit der Bedeutung von X', für eine -COOH-Gruppe oder für eine -COOR¹-Gruppe oder eine - COOR¹¹-Gruppe steht, worin R¹ bzw. -R¹¹, gleich oder verschieden, die vorstehend angegebene Bedeutung haben,
Z" für Wasserstoff, einen ggf. verzweigten Alkylrest mit 1-10 C-Atomen oder einen Arylrest mit 6-20 C-Atomen steht, wobei jeder dieser Reste mit einer Carboxylgruppe substituiert sein kann,
X" gleich oder verschieden von Z", die Bedeutung von Z" hat, wobei entweder nur Z" oder X" die Bedeutung von Wasserstoff haben kann,
   worin die Struktureinheiten IV bis VII zumindest teilweise als mit mindestens einer vorzugsweise oligomeren, wenigstens eine basische Gruppe aufweisenden, vorzugsweise organischen Verbindung (5) als Versalzungsverbindung umgesetzt in versalzener Form vorliegen.

Wie bereits ausgeführt, weisen die Struktureinheiten I-III keine sauren funktionellen Gruppen,die Struktureinheiten IV bis VII jeweils mindestens eine saure Gruppe auf und im unversalzten Copolymeren (4) beträgt das molare Verhältnis von sauren, funktionellen Gruppen zu ggf. vorhandenen N-haltigen, basischen Gruppen und/oder entsprechenden quarternierten Gruppen des unversalzten Copolymeren (4) wenigstens 5:1, vorzugsweise wenigstens 10:1, besonders bevorzugt wenigstens 20:1.

In einer besonders bevorzugten Ausführungsform enthält das unversalzte Copolymere (4) keine N-haltigen, basischen Gruppen und/oder entsprechenden quarternierten Gruppen.

Vorzugsweise kann das als Vermittleradditiv zum Einsatz kommende Copolymere (4) die Struktureinheiten I-VII umfassen, in denen
R, gleich oder verschieden, für Wasserstoff, eine Methyl- oder Ethyl-Rest steht,
X, gleich oder verschieden, für eine -NH-R¹ Gruppe oder eine -OR¹ Gruppe steht, worin R¹,gleich oder verschieden, für einen ggf. verzweigten Alkylrest mit 1 bis 8 C-Atomen, einen Benzylrest, einen ggf. verzweigten Alkylenrest mit 1 bis 8 C-Atomen, ggf. substituiert mit einer vorzugsweise als Endgruppe vorliegenden OH-Gruppe, oder einen Polyalkylenoxid-Rest steht,
Y für einen ggfs. substituierten Phenyl-, Naphtyl-, Pyrrolidon-Rest, einen ε-Caprolactam Rest, einen über eine -O- Brücke verbundenen Polyalkylenoxid- oder einen Acetat-Rest steht, wobei jeder dieser Reste keine sauren funktionellen Gruppen aufweist
Z für eine -COOR¹-Gruppe steht, worin R¹ gleich oder verschieden, die vorstehend angegebene Bedeutung hat oder
Z zusammen mit der Gruppe 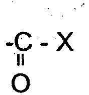 mit X in der Bedeutung einer Gruppe 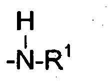 eine cyclische Imidgruppierung bildet, deren Stickstoff mit einem Rest R¹, gleich oder verschieden, mit der vorstehend angegebenen Bedeutung substituiert ist,
X', gleich oder verschieden, für eine -OH-Gruppe, die ggf. als eine durch Versalzung mit wenigstens einer der nachstehend angegebenen, vorzugsweise organischen basischen Verbindungen (5) versalzte Gruppe vorliegt, oder
   für eine -OR¹¹ Gruppe steht, worin
   R¹¹ für einen ggf. verzweigten Alkylrest oder Alkenylrest mit 1 bis 16 C-Atomen steht, der mindestens eine carbonsaure, sulfonsaure, phosphonsaure und/oder phosphorsaure Gruppe aufweist, die ggf. durch Versalzung mit wenigstens einer der nachstehend aufgeführten, vorzugsweise organischen basischen Verbindungen (5) als versalzte Gruppe vorliegt,
   Y` für eine Phosphonsäuregruppe, Phosphorsäuregruppe, für ein lineares oder verzweigtes aliphatisches Radikal mit 1 bis 8 C-Atomen oder aromatisches Radikal mit wenigstens 6-C-Atomen steht, wobei jedes Radikal mindestens eine carbonsaure, sulfonsaure, phosphonsaure und/oder phosphorsauren Gruppe aufweist, die ggf. durch Versalzung mit wenigstens einer der nachstehend aufgeführten, vorzugsweise organischen, basischen Verbindungen (5) als versalzte Gruppe vorliegt,
   Z', gleich oder verschieden von X', für eine Gruppierung mit der Bedeutung von X', für eine -COOH-Gruppe oder für eine -COOR¹-Gruppe steht, worin R¹, gleich oder verschieden, die vorstehend angegebene Bedeutung hat,
   Z", für Wasserstoff, einen ggf. verzweigten Alkylrest mit 1-6 C-Atomen oder einen Arylrest mit 6-10 C-Atomen steht, wobei jeder der Reste mit einer Carboxylgruppe substituiert sein kann,
   X", gleich oder verschieden von Z", die Bedeutung von Z" hat, wobei entweder nur Z" oder nur X" die Bedeutung von Wasserstoff haben kann, worin die Struktureinheiten IV bis VII zumindest teilweise als mit mindestens einer vorzugsweise oligomeren, wenigstens eine basische Gruppe aufweisenden, vorzugsweise organischen Verbindung (5) als Versalzungsverbindung umgesetzt in versalzter Form vorliegen könnenund die vorstehend aufgeführten Bedingungen betreffend die Anteile der einzelnen Komponten in der erfindungsgemäßen Zusammensetzung und die molaren Verhaltnisse von sauren funktionellen Gruppen zu ggf. vorhandenen N-haltigen basischen Gruppen in Copolymeren (4) gelten.

Als eine unverträgliche Mischung von Polyolen wird erfindungsgemäß eine Mischung von mindestens zwei an sich unverträglichen Polyolen oder eine Mischung von mindestens, durch Zugabe von wenigstens einem Zusatz- und/oder Hilfsstoff unverträglich werdenden Polyolen angesehen, die jeweils bei einer Lagerung bei einer Temperatur von 20 °C nach ihrer Mischung mit üblichen Mischgeräten bis zur Einphasigkeit wieder eine (durch Augenschein wahrnehmbare) sichtbare Zweiphasenbildung aufweist

Dabei wird vorzugsweise das Vermittleradditiv (4) in solchen Mengen der mehrphasigen Mischung umfassend wenigstens zwei Polyole (1) und (2) hinzugefügt, dass bei der Mischung mit üblichen Mischgeräten, eine lagerstabile Einphäsigkeit der erfindungsgemäßen Zusammensetzung erzielt wird. Bevorzugt wird die zugegebene Menge des Vermittleradditivs so ausgewählt, dass die lagerstabile Einnphasigkeit der so erhaltenen einphasigen Zusammensetzung um wenigstens 50%, zumindest jedoch um 6 Stunden gegenüber der entsprechenden Zusammensetzung ohne Zugabe des Vermittleradditivs (4) gewährleistet wird.

Besonders bevorzugt wird die zugegebene Menge des Vermittleradditivs (4) so ausgewählt, dass die lagerstabile Einphasigkeit der so erhaltenen Zusammensetzung um wenigstens 100%, zumindest jedoch um 12 Stunden gegenüber der entsprechenden Zusammensetzung ohne Zugabe des Vermittleradditivs (4) gewährleistet wird.

Ganz besonders bevorzugt wird die zugegebene Menge des Vermittleradditivs (4) so ausgewählt, dass die lagerstabile Einphasigkeit der so erhaltenen Zusammensetzung um wenigstens 200%, zumindest jedoch um 24 Stunden gegenüber der entsprechenden Zusammensetzung ohne Zugabe des Vermittleradditivs (4) gewährleistet wird. Insbesondere bevorzugt wird die zugegebene Menge des Vermittleradditivs (4) so ausgewählt, dass die Einphasigkeit der so erhaltenen Zusammensetzung bis zu deren reaktiven Umsetzung zu einem Polyurethan gewährleistet ist.

Das als Vermittleradditiv (4) zum Einsatz kommende Copolymere kann einen statistischen, gradientenartigen oder blockartigen Aufbau der copolymerisierten Struktureinheiten aufweisen, der ggf. Kammstrukturen umfasst. Gegenüber einem statistischen Copolymer werden solche Strukturen unter dem Begriff "strukturierte Copolymere" zusamengefasst.

In einer bevorzugten Ausführungsform handelt es sich bei dem Vermittleradditiv (4) um ein strukturiertes Copolymeres.

Strukturierte Copolymere sind lineare Blockcopolymere, gradientenartige Copolymere, verzweigte/sternförmige Blockcopolymere und Kammcopolymere.

Gradientenartige Copolymere der erfindungsgemäß zum Einsatz kommenden Copolymere sind Copolymere, bei denen entlang der Polymerketten die Konzentration der Struktureinheiten eines bestimmten ethylenisch ungesättigten Monomers oder der Struktureinheiten einer Mischung von ethylenisch ungesättigten Monomeren kontinuierlich abnimmt und die Konzentration der Struktureinheiten eines davon unterschiedlichen ethylenisch gesättigten Monomeren oder der Struktureinheiten einer Mischung von davon unterschiedlichen ethylenisch ungesättigten Monomeren zunimmt.

Beispielhaft für gradientenartige Copolymere wird auf Offenbarung in EP 1 416 019 und WO 01/44389 sowie auf Macromolecules 2004, 37, 966, Macromolecular Reaction Engineering 2009, 3, 148, Polymer 2008, 49, 1567 und Biomacromolecules 2003, 4, 1386 verwiesen.

Als Blockcopolymere, die erfindungsgemäß zum Einsatz kommen, werden Copolymere verstanden, die durch Zugabe von mindestens zwei unterschiedlichen ethylenisch ungesättigten Monomere, zwei unterschiedlichen Mischungen ethylenisch ungesättigter Monomere oder durch Zugabe eines ethylenisch ungesättigten Monomeren und einer Mischung von ethylenisch ungesättigten Monomeren zu unterschiedlichen Zeitpunkten bei der Durchführung einer kontrollierten Polymerisation erhalten werden. Hierbei können alle bei der Polymerisation eingesetzten ethylenisch ungesättigten Monomere bzw. Mischungen von ethylenisch ungesättigten Monomeren während der Durchführung der Polymerisation zum Reaktionsansatz portionsweise zugegeben bzw. zudosiert werden, oder es wird ein ethylenisch ungesättigtes Monomeres oder eine Mischung von ethylenisch ungesättigten Monomeren zu Beginn der Reaktion vorgelegt und die anderen ethylenisch ungesättigten Monomere bzw. Mischungen von ethylenisch ungesättigten Monomeren werden zudosiert. Bei der Zugabe des weiteren ethylenisch ungesättigten Monomeren oder der Mischung von ethylenisch ungesättigten Monomeren oder der Zugabe ethylenisch ungesättigten Monomeren in mehreren Raten, können die zu Beginn der Polymerisation vorgelegten bzw. die bis zu diesem Zeitpunkt bereits zudosierten, ethylenisch ungesättigten Monomere entweder bereits komplett abreagiert oder aber noch teilweise nicht polymerisiert sein. Durch eine solche Polymerisation weisen Blockcopolymere mindestens einen sprunghaften oder aber gradientenartigen Übergang in ihren Struktureinheiten entlang der Polymerkette auf, der die Grenze zwischen den einzelnen Blöcken darstellt.

Solche Blockcopolymerstrukturen, die vorzugsweise zum Einsatz kommen können, sind beispielsweise AB-Diblockeopolymere, ABA- oder ABC-Triblockcopolyrnere. Beispiele für die Herstellung solcher Blockcopolymerstrukturen finden sich in US 6,849,679, US 4,656,226, US 4,755,563, US 5,085,698, US 5,160,372, US 5,219,945, US 5,221,334, US 5,272,201, US 5,519,085, US 5,859,113, US 6,306,994, US 6,316,564, US 6,413,306, EP 1416019, EP 1803753, WO 01/44389 und WO 03/046029.

Blockcopolymere, die vorzugsweise erfindungsgemäß zum Einsatz kommen, enthalten Blöcke mit einer Mindestanzahl von 3 Struktureinheiten pro Block. Vorzugsweise beträgt die Mindestanzahl an Struktureinheiten pro Block 3, besonders bevorzugt 5 und ganz besonders bevorzugt 8.

Dabei können in jedem der Blöcke dieselben Struktureinheiten, aber jeweils in unterschiedlicher Zahl vorliegen, oder jeder der Blöcke ist aus unterschiedlichen Struktureinheiten aufgebaut.

In einer bevorzugten Ausführungsform weist das Vermittleradditiv (4) eine Blockstruktur vom Typ A-B, A-B-A, B-A-B, A-B-C und /oder A-C-B auf, in der die A, B und C Blöcke eine unterschiedliche Zusammensetzung der Struktureinheiten repräsentieren, wobei sich die Blöcke A, B und C durch ihre jeweilige Zusammensetzung der Struktureinheiten I-VII unterscheiden und in zwei benachbarten Blöcken sich der Anteil der Struktureinheiten IV-VII um mindestens 5 Gew.%, bezogen auf die Gesamtmenge des jeweiligen Blocks, voneinander unterscheidet.

Besonders bevorzugt sind Blockstrukturen, in denen
der Block A von 0 bis 25 Gew.% wenigstens einer der Struktureinheiten IV-VII, ggfs. zumindest teilweise versalzt enthält,
der Block B von 50 Gew.% bis 100 Gew.% wenigstens einer der Struktureinheiten IV- VII, ggfs. zumindest teilweise versalzt enthält,
und der Block C von 0 bis 75 Gew.% wenigstens einer der Struktureinheiten IV-VII, ggfs. zumindest teilweise versalzt enthält,
wobei sich die Gew.%-Angaben der Struktureinheiten IV-VII, auf deren saure, d. h. nicht-versalzte Form beziehen.

Eine ganz besonders bevorzugten Ausführungsform ist dadurch gekennzeichnet, dass
der Block A von 0 bis 10 Gew.% wenigstens einer der Struktureinheiten IV-VII ggfs. zumindest teilweise versalzt enthält,
der Block B von 75 Gew.% bis 100 Gew.% wenigstens einer der Struktureinheiten IV- VII ggfs. zumindest teilweise versalzt enthält,
und der Block C von 0 bis 50 Gew.% wenigstens einer der Struktureinheiten IV-VII ggfs. zumindest teilweise versalzt enthält,
wobei sich die Gew.%-Angaben der Struktureinheiten IV-VI auf deren saure, d. h. nicht-versalzte Form beziehen.

Gemäß einer bevorzugten Gesamtzusammensetzung des als Vermittleradditiv eingesetzten Copolymeren (4) beträgt der Anteil der Struktureinheiten IV-VII im nicht-versalzten Zustand von 5 bis 95 Gew.%, besonders bevorzugt von 15 bis 60 Gew.% und ganz besonders bevorzugt von 20 bis 45 Gew.%, der Anteil der Struktureinheiten I-III von 95 bis 5 Gew.%, besonders bevorzugt von 60 bis 15 Gew.% und ganz besonders bevorzugt von 45 bis 20 Gew.%, und der Anteil der ggf. vorhandenen radikalisch öder ionisch copolymerisierbaren α,β-ungesättigten Monomeren von 0 bis 10 Gew.% , besonders bevorzugt von 0 bis 5 Gew.% und ganz besonders bevorzugt 0 Gew.%, jeweils bezogen auf 100 Gew.% des Copolymeren (4), und wobei die Summe der Anteile immer 100 Gew.% ergeben muss.

In einer bevorzugten Ausführung der Erfindung liegt das als Vermittleradditiv eingesetzten Copolymere (4) in einem Zustand vor, in dem mindestens 5 mol%, vorzugsweise mindestens 20 mol%, besonders bevorzugt mindestens 60 mol%, ganz besonders bevorzugt mindestens 80 mol% der sauren funktionellen Gruppen aufweisenden Struktureinheiten IV-VII in einem mit einer basischen, vorzugsweise Stickstoffhaltigen, vorzugsweise organischen Verbindung, welche ggf. zumindest oligomer ist, versalzt wurden.

Vorzugsweise besitzen die erfindungsgemäß zum Einsatz kommenden Copolymere in ihrer unversalzten Form ein zahlenmittleres Molekulargewicht Mₙ von 600 bis 250000 g/mol, besonders bevorzugt 1000 bis 25000 g/mol und ganz besonders bevorzugt 1500 bis 10000 g/mol. Die Bestimmung der Molekulargewichte erfolgt mit Hilfe der Gelpermeationschromatographie (GPC) und ist in den Beispielen näher erläutert.

Die erfindungsgemäß zum Einsatz kommenden Copolymeren zeichnen sich durch wenigstens eine der Struktureinheiten IV bis VII aus, die eine deprotonierbare saure Gruppe durch Polymerisation eines entsprechenden ethylenisch ungesättigten Monomeren aufweist bzw. bei denen eine solche deprotonierbare Gruppe durch kettenanaloge Umsetzung in das Molekül eingebaut wurde.

Unter einer deprotonierbaren sauren Gruppe wird erfindungsgemäß eine Gruppe verstanden, in der ein acides Wasserstoffatom in Gegenwart einer Base zu einem Anion reagieren kann, wobei diese Reaktion ggf. auch reversibel verläuft. Schematisch wird dies anhand folgender Reaktionen verdeutlicht, in denen B für eine Base und BH³ für deren korrespondierende Säure steht.

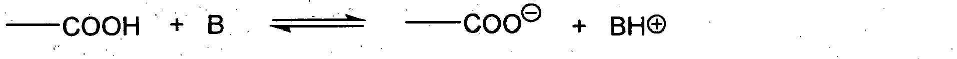

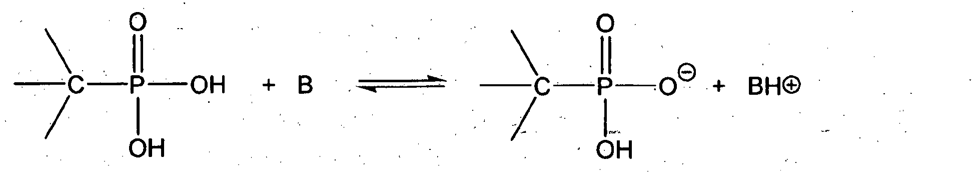

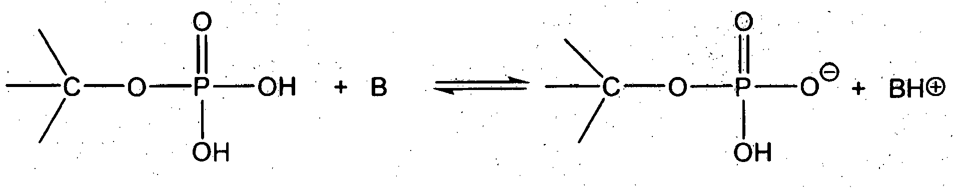

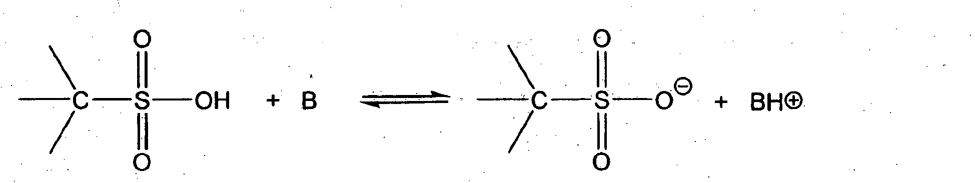

Beispiele für Verbindungen, die deprotonierbare Gruppen aufweisen, sind z.B. Verbindungen, die carbonsaure, phosphonsaure, phosphorsaure und/oder sulfonsaure Gruppen aufweisen.

Besonders bevorzugt als Monomere sind einfach ethylenisch ungesättigte, aliphatische Verbindungen mit carbonsauen oder phosphorsauren Gruppen.

Die Struktureinheiten IV - VII der erfindungsgemäß zum Einsatz kommenden Copolymeren können sich vorzugsweise von ethylenisch ungesättigten, vorzugsweise aliphatischen Monomeren, die saure Gruppen aufweisen, und/oder Vinylgruppen aufweisenden, vorzugsweise aromatischen Cyclen mit wenigstens einer deprotonierbaren Gruppe als substituierte, funktionelle Gruppe ableiten.

In einer bevorzugten Ausführungsform sind die Struktureinheiten IV-VII des Copolymeren (4) durch Polymerisation von ethylenisch ungesättigten Monomeren ausgewählt aus der Gruppe umfassend (i) ethylenisch ungesättigten, aliphatischen Monomeren, die saure funktionelle Gruppen aufweisen, und (ii) Monomere, die eine C=C-Doppelbindung und wenigstens eine deprotonierbare Gruppe aufweisen und vorzugsweise aromatische Reste enthalten, vorzugsweise von ethylenischungesättigten Monomeren, die mindestens eine Carbonsäure-, Phosphonsäure-, Phosphorsäure- und/oder Sulfonsäure-Gruppe aufweisen, hergestellt worden.

Bevorzugt können als wenigstens eine saure Gruppe aufweisende, ethylenischungesättigte Monomere mit mindestens einer carbonsauren, phosphönsauren, phosphorsauren und/oder sulfonsauren Gruppe wenigstens ein Monomeres ausgewählt aus der Gruppe umfassend (Meth)acrylsäure, Carboxyethyl(meth)acrylat, Itaconsäure, Fumarsäure, Maleinsäure, Citraconsäure, Crotonsäure, Zimtsäure, Vinylsulfonsäure, 2-Methyl-2-[(1-oxo-2-propenyl)amino]-1-propansulfonsäure, Styrolsulfonsäure, Vinylbenzolsulfonsäure, Vinylphosphonsäure, Vinylphosphorsäure, 2-(Meth)acryloyloxyethylphosphat, 3-(Meth)acryloyloxypropylphosphat, 4-_(Meth)acryloyloxybutylphosphat, 4-(2-Methacryloyloxyethyl)trimellithsäure, 10-Methacryloyloxydecyld ihydrogenphosphat, Ethyl-2-[4-(dihydroxyphosphoryl)-2-oxabutyl]acrylate, 2-[4-(Dihydroxyphosphoryl)-2-oxabutyl]acrylsäure, 2,4,6-Trimethylphenyl-2-[4-(dihydroxyphosphoryl)-2-oxabutyl]acrylat, ungesättigte Fettsäuren und die in EP 1674067 A1 genannten sauren Gruppen aufweisende Monomere mit einer polymerisierbaren Doppelbindung eingesetzt werden. Monomere mit mehr als einer sauren funktionellen Gruppe können auch in Form ihrer sauren Partialester eingesetzt werden.

Ganz besonders bevorzugt sind α, β-ungesättigte Carbonsäuren wie (Meth)acrylsäure, saure (Meth)acrylsäureester, Maleinsäure und deren saure Derivate wie Partialester, Partialamide.

Die saure funktionelle Gruppen aufweisenden Struktureinheiten IV-VII der erfindungsgemäß zum Einsatz kommenden Copolymeren können auch durch Modifikation von Struktureinheiten nach deren Herstellung z. B: durch Polymerisation von OH-Gruppen enthaltenden, ethylenisch ungesättigten Monomeren wie z. B. Hydroxyalkyl(meth)acrylaten, und anschließende Umsetzung der OH-Gruppen mit entsprechenden, reaktiven cyclischen Carbonsäureanhydriden zu deren sauren Halbester oder durch Umsetzung der OH-Gruppen mit Sultonen oder durch Umsetzung der OH-Gruppen mit Phosphorylierungsmitteln oder durch Carboxymethylierung erhalten werden.

Alternativ können auch durch Hydrolyse von Struktureinheiten der erfindungsgemäß zum Einsatz kommenden Copolymere (4), die sich beispielsweise von (Meth)acrylsäureestern und -amiden, von Maleinsäureestern oder deren Anhydrid oder von silylgeschützten ungesättigten Carbonsäuren wie z. B. Trimethylsilylmethacrylat ableiten, saure funktionelle Gruppen in Copolymeren (4) erzeugt werden. Diese Verfahrensweise bietet sich z.B. an, wenn die zur Herstellung der Copolymeren (4) verwendete Polymerisationsmethode durch die Gegenwart von sauren Monomeren behindert wird wie z. B. bei der anionischen Polymerisation.

Zur Herstellung der Struktureinheiten I-III der erfindungsgemäß zum Einsatz kommenden Copolymeren können vorzugsweise wenigstens ein ethylenisch ungesättigtes Monomeres ausgewählt aus der Gruppe umfassend Alkyl(meth)acrylate von geradkettigen, verzweigten oder cycloaliphatischen Mono-Alkoholen mit 1 bis 22 Kohlenstoffatomen, vorzugsweise Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Tridecyl(meth)acrylat. Cyclohexyl(meth)acrylat, Isobornyl(meth)acrylat, Allyl(meth)acrylat und t-Butyl(meth)acrylat; Aryl(meth)acrylate, vorzugsweise ggf. bis zu vierfach substituiertem Benzyl(meth)acrylat und Phenyl(meth)acrylat, wie 4-Nitrophenylmethacrylat; Hydroxyalkyl(meth)acrylate von geradkettigen, verzweigten oder cycloaliphatischen Diolen mit 2 bis 36 Kohlenstoffatomen, wie zum Beispiel 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiomonomethacrylat; Hydroxyphenoxypropylmethacrylat, Mono(meth)acrylate von oligomeren oder polymeren Ethern, wie z. B. Polyethylenglykolen, Polypropylenglycolen oder gemischten Polyethylen/propylenglycolen, Poly(ethylenglycol)methylether(meth)acrylat, Poly(propylenglycol)methylether(meth)-acrylat mit 5 bis 80 Kohlenstoffatomen, Methoxyethoxyethyl(meth)acrylat, 1-Butoxypropyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2- Butoxyethyl(meth)acrylat, 2-Ethoxyethyl(meth)acrylat, Allyloxymethyl(meth)acrylat, 1-Ethoxybutyl(meth)acrylat, 1-Ethoxyethyl(meth)acrylat, Ethoxymethyl(meth)acrylat, Caprolacton- und/oder Valerolacton-modifizierte Hydroxyalkyl(meth)acrylate mit einem zahlenmittleren Molekulargewicht Mₙ von 220 bis 1200,
wobei die Hydroxy(meth)acrylate bevorzugt von geradkettigen, verzweigten oder cycloaliphatischen Diolen mit 2 bis 8 Kohlenstoffatomen abgeleitet sind; (Meth)-acrylate von halogenierten Alkoholen, vorzugsweise Perfluoralkyl(meth)acrylate mit 6 bis 20 Kohlenstoffatomen; oxiranhaltige (Meth)acrylate, vorzugsweise 2,3-Epoxybutylmethacrylat, 3,4-Epoxybutylmethacrylat und Glycidyl(meth)acrylat; Styrol und substituierte Styrole, vorzugsweise α-Methylstyrol oder 4-Methylstyrol; Methacrylnitril und Acrylnitril; Vinylgruppen aufweisende nicht basische, cycloaliphatische Heterocyclen mit wenigstens einem N-Atom als Ringglied, vorzugsweise 1-[2-(Methacrylyloxy)-ethyl]-2-imidazolidin und N-Vinylpyrrolidon, N-Vinylcaprolactam; Vinylester von Mono-Carbonsäuren mit 1 bis 20 Kohlenstoffatomen, vorzugsweise Vinylacetat; Maleinsäureanhydrid und deren Diester; Maleinimid, N-Phenylmaleinimid und N-substituierte Maleinimide mit geradkettigen, verzweigten oder cycloaliphatischen Alkylgruppen mit 1 bis 22 Kohlenstoffatomen, vorzugsweise N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 Kohlenstoffatomen, vorzugsweise N-(t-Butyl)acrylamid und N,N-Dimethylacrylamid eingesetzt werden, wobei keines der Monomeren eine saure funktionelle Gruppe aufweist.

In einer weiteren bevorzugten Ausführungsform sind die Struktureinheiten I-III des Copolymeren (4) durch Polymerisation von ethylenisch ungesättigten Monomeren ausgewählt aus der Gruppe umfassend (Meth)acrylsäureester, die ggfs. funktionelle Gruppen, wie OH-, Halogen-, Lacton- und/oder Epoxy-Gruppen aufweisen oder sich von Polyethern ableiten, ggf. substituierte (Meth)acrylsäureamide, ggfs. substituiertes Styrol, Maleinsäure-anhydrid und- Diester, Maleinimide, Vinylgruppen aufweisende, nicht basische, cycloaliphatische Heterocyclen mit wenigstens einem N-Atom als Ringglied, Vinylester von Carbonsäuren, wobei keines der Monomeren eine saure funktionelle Gruppe aufweist, erhalten worden.

Nach erfolgter Polymerisation können die Struktureinheiten I-III, die sich von diesen ethylenisch ungesättigten Monomeren ableiten, noch weiter modifiziert werden.

So lassen sich zum Beispiel Oxiranstrukturen mit nucleophilen Verbindungen, wie 4-Nitrobenzoesäure, umsetzen. Hydroxygruppen können mit Lactonen, wie zum Beispiel ε-Caprolacton, zu-Polyestern umgesetzt werden und aus Estergruppen können durch säure- oder basenkatalysierte Esterspaltung Polymer-Struktureinheiten mit OH-Gruppen freigesetzt werden.

Die durch Polymerisation von ethylenisch-ungesättigten Monomeren erhaltene Copolymere (4) mit deprotonierbaren Gruppen in den Struktureinheiten IV-VII, können nach einer bekannten Methode zumindest partiell versalzt werden.

Zur Versalzung können die Struktureinheiten IV-VII mit deprotonierbaren Gruppen mit mindestens einer, ggf. oligomeren, wenigstens eine basische Gruppe aufweisenden, vorzugsweise organischen Verbindungen (5) wie nachstehend aufgeführt, umgesetzt werden.

Als geeignete basische Verbindung (5) zur Versetzung der Struktureinheiteri IV-VII kann wenigstens eine salzbildende Verbindung ausgewählt aus der Gruppe umfassend Metalloxide und- hydroxide, Metall(hydrogen)carbonate, Ammoniak, ggfs. substituierte aliphatische und aromatischen Amine eingesetzt werden. Bevorzugt werden als basische Verbindung (5) zur Versalzurig der Struktureinheiten IV-VII organische Verbindungen auf Basis von ggfs. substituierten, aliphatischen und/oder aromatischen Aminen eingesetzt.

Als geeignete Amine können aliphatische oder aromatische primäre, sekundäre und tertiäre Amine verwendet werden. Bevorzugte Amine sind aliphatische Amine mit 1-24 C-Atomen, die ggf. mit Hydroxygruppen und/oder Alkoxygruppen substitutiert sein können, cycloäliphatische Amine mit 4-20 C-Atomen, die ggf. mit Hydroxygruppen und/oder Alkoxygruppen substituiert sein können, aromatische Amine mit 6-24 C-Atomen, die gebenenfalls mit Hydroxygruppen und / oder Alkoxygruppen substituiert sein können.

Als Beispiele für solche bevorzugten Amine sind Monomethylamin, Monoethylamin, n-Propylamin, Isopropylamin, Butylamin, n-Pentylamin, t-Butylamin, Hexylamin, Octylamin, 2-Ethylhexylamin, Dodecylamin, Tridecylamin, Oleylamin, Dimethylamin, Diethylamin, Dipropylamin, Dibutylamin, Dihexylamin, Bis(2-ethylhexyl)amin, Bis(tridecyl)amin, 3-Methoxypropylamin, 2-Ethoxyethylamin, 3-Ethoxypropylamin, 3-(2-Ethylhexyloxy)propylamin, Cyclopentylamin, Cyclohexylamin, 1-Phenylethylamin, Dicyclohexylamin, Benzylamin, N-Methylbenzylamin, N-Ethylbenzylamin, 2-Phenylethylamin, Anilin, o-Toluidin, 2,6-Xylidin, 1,2-Phenylendiamin, 1,3-Phenylendiamin, 1,4-Phenylendiamin, o-Xylylendiamin, m-Xylylendiamin, p-Xylylendiamin, Ethylendiamin, 1,3-Propandiamin, 1,2-Propandiamin, 1,4-Butandiamin, 1,2-Butandiamin, 1,3-Butandiamin, Neopentandiamin, Hexamethylendiamin, Octamethylendiamin, Isophorondiamin, 4,4'-Diaminodicyclohexylmethan, 3,3'-Dimethyl-4,4'-diaminodicyclohexylmethan, 4,4'-Diaminodiphenylmethan, 4,9-Dioxyadodecan-1,12-diamin, 4,7,10-Trioxatridecan-1,13-diamin, 3-(Methylamino)propylamin, 3-(Cyclohexylamino)propylamin, 3-(Diethylamino)ethylarnin, 3-(Dimethylamino)propylamin, 3-(Diethylamino)-propylamin, Diethylentriamin, Triethytentetramin, Tetraethylenpentamin, 3-(2-Aminoethyl)aminopropylamin, Dipropylentriamin, N,N-Bis-(3-aminopropyl)methylamin, N,N'-Bis(3-aminopropyl)ethylendiamin, Bis(3-dimethylaminopropyl)amin, N-(3-Aminopropyl)imidazol, Monoethanolamin, 3-Amino-1-propanol, Isopropanolamin, 5-Amino-1-pentanol, 2-(2-Am)noethoxy)ethano), Aminoethylethanolamin, N-(2-Hydroxyethyl)-1,3-Propandiamin, N-Methylethanolamin, N-Ethylethanolamin, N-Butylethanolamin; Diethanolamin, 3-((2-Hydroxyethyl)amino)-1-propanol, Diisopropanolamin, N-(2-Hydroxyethyl)anilin, 1-Methyl-3-phenylpropylamin, Furfurylamin, N-Isopropylbenzylamin, 1-(1-Naphthyl)ethylamin, N-Benzylethanolamin, 2-(4-Methoxyphenyl)ethylamin, N,N-Dimethylaminoethylamin, Ethoxypropylamin, 2-Methoxyethylamin, 2-Ethoxyethylamin, 2-Cyclohexenylethylamin, Piperidin, Diethylaminopropylamin, 4-Methylcyclohexylamin, Hydroxynovaldiamin, 3-(2-Ethylhexyloxy)propylamin, Tris(2-aminoethyl)amin, N,N'-Di-tert-butylethylendiamin, Tris(hydroxymethyl)aminomethan, Triethylamin, Triethanolamin, Dimethylethanolamin, Dibutylethanolamin, Dimethylaminopropanol, 2-Amino-2-methylpropanol, Dimethylaminopyridin, Morpholin, Methylmorpholin, Aminopropylmorpholin zu nennen.

Desweiteren können auch Polyether mit wenigstens einer Amino-Endgruppe eingesetzt werden. Vorzugsweise basiert der Polyether auf einem Alkylenoxid, vorzugsweise Ethylenoxid und/oder Propylenoxid und/oder ggf. weiteren Epoxiden wie z. B. Butylenoxid, Styroloxid, oder Tetrahydrofuran und ist mit Aminogruppen funktionalisiert. Die Polyether können je nach Strukturaufbau eine, zwei oder mehr als zwei Aminogruppen aufweisen. Solche Produkte werden z.B. von der Firma Huntsman unter dem Namen "Jeffamine" oder von der Firma BASF als "Polyetheramin" vertrieben und tragen z.B. die Bezeichnungen M-600, M-1000, M-2005, M-2070, D-230, D-400, D-2000, D-4000, T-403, T-3000, T-5000, Polytetrafuranamin 1700, ED-600, ED-900, ED-2003, HK-511, EDR-148, EDR-176, SD-231, SD-401, SD-2001, ST-404.

In einer weiteren Ausführungsform sind als basische Verbindung (5) aliphatische und aromatische primäre, sekundäre und tertiäre Amine, vorzugsweise aliphatische Amine mit 1-24 C-Atomen, cycloaliphatische Amine mit 4 - 20 C-Atomen, aromatische Amine mit 6 - 24 C-Atomen, die jeweils gegebenenfalls mit Hydroxygruppen und/oder Alkoxygruppen substituiert sein können, und/oder wenigstens ein mindestens eine Amino-Endgruppe aufweisender, vorzugsweise wenigstens oligomeren Polyether basierend auf Alkylenoxid, vorzugsweise auf Ethylenoxid und/oder Propylenoxid und/oder ggf. Butylenoxid, Styroloxid oder Tetrahydrofuran, und/oder wenigstens eine, vorzugsweise zumindest oligomere Verbindung ausgewählt aus der Gruppe der alkoxylierten, gesättigten oder ungesättigten primären und sekundären Amine mit 1-24 C-Atomen eingesetzt-worden.

Ferner können als Versaltzungskomponente dentritische Polyiminstrukturen wie vorzugsweise Polyethylenimine und/oder Polypröpylenimine, besonders bevorzugt Polyethylenimine eingesetzt werden. Diese Polyimine können ggf. auch durch Alkoxylierung der Aminofunktionen modifiziert sein. Eine weitere Variationsmöglichkeit zur Modifizierung der Polyimine ist deren Umsetzung mit Fettsäuren.

In einer besonders bevorzugten Ausführung der vorliegenden Erfindung werden als aminische Versalzungskomponente alkoxylierte Mono- und/oder Polyamine eingesetzt. Beispiele hierfür stellen alkoxylierte Alkylamine, Alkenylamine, Alkylendiamine, Alkenylendiamine und Polyamine dar, wie z.B. alkoxylierte Derivate des Ethylendiamins, Diethylentriamins, Triethylentetramins, sowie deren höherer Homologer sowie Alkoxylierte Derivate des Stearylamins, Oleylamins oder Kokosamins. Oligomere Ethoxylate von primären Aminen, welche am Stickstoff einen verzweigten oder unverzweigten Alkyl- oder Alkenylrest mit 6-24 C-Atomen tragen, sind ganz besonders bevorzugte Versalzungskomponenten.

Durch Einsatz von bereits versalzten, d. h. durch Deprotonierung der sauren funktionellen Gruppen von ethylenisch ungesättigten Monomeren können die Struktureinheiten IV-VII bereits in ihrer versalzten Form durch direkte Polymerisation der versalzten Monomere erhalten werden.

Beispiele für solche Monomere, die direkt zur Polymerisation eingesetzt werden können, sind z. B. Natrium(meth)acrylat, Kalium(meth)acrylat, Natriumstyrolsulfonat, Kalium-3-sulfopropyl(meth)acrylat, Natrium-3-allyloxy-2-hydroxypropansulfonat oder das Kaliumsalz von Itaconsäurebis-(3-sulfopropylester).

Das erfindungsgemäß zum Einsatz kommende Copolymer (4) kann ggf. außer den Struktureinheiten I-VII auch noch Struktureinheiten von radikalisch oder ionisch copolymerisierbaren α,β ungesättigten Monomeren mit der Maßgabe aufweisen, dass durch deren Copolymerisation das molare Verhältnis von sauren, funktionellen Gruppen zu ggf. vorhandenen N-haltigen, basischen Gruppen von wenigsten 5:1 im Copolymeren nicht unterschritten wird.

Bevorzugt beträgt der Anteil dieser radikalisch oder ionisch copolymerisierbaren α, β-ungesättigten Monomeren im Copolymer (4) gleich oder weniger als 10 Gew.%.

Besonders bevorzugt beträgt der Anteil dieser radikalisch oder ionisch copolymerisierbaren α,β-ungesättigten Monomeren im Copolymer (4) gleich oder weniger als 5 Gew.%.

Ganz besonders bevorzugt besteht das Copolymer (4) ausschließlich aus den Struktureinheiten I bis VII und enthält keine weiteren Struktureinheiten solcher radikalisch oder ionisch copolymerisierbaren α,β-ungesättigten Monomeren.

In einer ganz besonders bevorzugten Ausführung der vorliegende Erfindung handelt es sich bei dem Vermittleradditiv (4) um ein Versalzungsprodukt aus einem strukturierten Copolymeren, welches von den Struktureinheiten I bis III Einheiten enthält, welche durch Polymerisation von Styrol oder Benzyl(meth)acrylat erhalten wurden, und welches von den Struktureinheiten IV bis VII Einheiten enthält, welche durch Polymerisation von (Meth)acrylsäure, Carboxyethyl(meth)acrylat oder Maleinsäure bzw. deren Derivaten erhalten wurden, und aus einem alkoxylierten Alkyl- oder Alkenylmonoamin, wobei mindestens 50% der Säuregruppen in versalzter Form vorliegen. Gegenstand der Erfindung sind daher auch diese ganz besonders bevorzugten Versalzungsprodukte selbst.

Vorzugsweise ist das Vermittleradditiv (4) ein strukturierte Copolymere, besonders bevorzugt ein Block-, Gradienten- oder Kammcopolymer, das vorzugsweise durch ein kontrolliertes radikalisches oder ionisches Polymerisationsverfahren hergestellt worden ist.

Besonders bevorzugt werden solche Vermittleradditive (4) durch kontrollierte radikalische Polymerisation oder Gruppentransferpolymerisation hergestellt.

Je nachdem welche der nachstehend aufgeführten Polymerisationstechniken eingesetzt wird, werden selbst bei Einsatz identischer ethylenisch ungesättigter Monomere und selbst bei denselben Molverhältnissen unterschiedliche Copolymere erhalten, da die unterschiedlichen Polymerisationstechniken zu unterschiedlichen Mikrostrukturen beziehungsweise zu unterschiedlichen Abfolgen der Struktureinheiten I - VII führen können. So werden beispielsweise bei der Herstellung von Blockcopolymeren nach unterschiedlichen Techniken bei Einsatz identischer Monomerenmischungen-unterschiedlich mikrostrukturierte Blöcke erhalten. Darüber hinaus können sich die Copolymeren auch noch hinsichtlich ihres Molekulargewichts und ihrer Molekulargewichtsverteilung deutlich unterscheiden. Gleiches gilt auch für gradientenartige Copolymere.

Für das Durchführen einer kontrollierten Polymerisation sind in der Literatur verschiedene Polymerisationsverfahren bekannt. Eine Übersicht über einige Verfahren ist in Prog. Polym. Sci. 32 (2007) 93-146 und in Chem. Rev. 2009, 109, 4963-5050 zu finden.

Als Polymerisationstechniken zur Herstellung der in den erfindungsgemäßen Zusammensetzungen als Vermittleradditiv (4) zum Einsatz kommenden Copolymere sind alle aus dem Stand der Technik bekannten Polymerisationstechniken zur Polymerisation ethylenisch-ungesättigter Monomeren anwendbar.

Beispielhaft sind nachfolgend einige Technologien zur Durchführung kontrollierter Polymerisationen genannt:
Die "Atom Transfer Radical Polymerization" (ATRP) ermöglicht eine kontrollierte Polymerisation und ist beispielsweise in Chem. Rev. 2001, 101, 2921 und in Chem. Rev. 2007, 107, 2270-2299 beschrieben.

Zu den kontrollierten Polymerisationsverfahren gehört auch der "Reversible Addition Fragmentation Chain Transfer Process" (RAFT), der bei Verwendung bestimmter Polymerisationsregler auch "MADIX" (macromolecular design via the interchange of xanthates) und "Addition Fragmentation Chain Transfer" genannt wird. RAFT ist beispielsweise in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 sowie 1991, 29, 1053 sowie 1993, 31, 1551 sowie 1994, 32, 2745 sowie 1996, 34, 95 sowie 2003, 41, 645 sowie 2004, 42, 597 sowie 2004, 42, 6021 und auch in Macromol. Rapid Commun. 2003, 24, 197, in Polymer 2005, 46, 8458-8468 sowie Polymer 2008, 49, 1079-1131 und in US 6 291 620, WO 98/01478, WO 98/58974 und WO 99/31144 beschrieben.

Gemäß einem weiteren Verfahren zur kontrollierten Polymerisation werden Nitroxylverbindungen als Polymerisationsreglern (NMP) eingesetzt, wie beispielsweise in Chem. Rev. 2001, 101, 3661 offenbart wird.

Ein weiteres kontrolliertes Polymerisationsverfahren ist auch die "Group Transfer Polymerization" (GTP) wie sie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff., sowie in O.W. Webster, Adv. Polym. Sci. 2004, 167, 1-34 offenbart ist.

Die kontrollierte radikalische Polymerisation mit Tetraphenylethan, wie sie beispielsweise in Macromol. Symp. 1996, 111, 63 beschrieben ist, ist ein weiteres Beispiel für eine kontrollierte Polymerisation zur Herstellung der erfindungsgemäß zum Einsatz kommenden Copolymeren.

Eine kontrollierte radikalische Polymerisation mit 1,1-Diphenylethen als Polymerisationsregler ist beispielsweise in Macromolecular Rapid Communications, 2001, 22, 700 beschrieben.

Die kontrollierte radikalische Polymerisation mit Organotellur-, Organoantimon- und Organobismuth-Kettenüberträgern wird in Chem. Rev. 2009, 109, 5051-5068 beschrieben.

Weiterhin ist eine kontrollierte radikalische Polymerisation mit Inifertern beispielsweise in Makromol. Chem. Rapid. Commun. 1982, 3, 127 offenbart.

Eine kontrollierte radikalische Polymerisation mit Organokobaltkomplexen ist beispielsweise aus J. Am. Chem Soc. 1994, 116, 7973, aus Journal of Polymer Science: Part A: Polymer Chemistry, Vol. 38, 1753-1766 (2000), aus Chem. Rev. 2001, 101, 3611-3659 sowie aus Macromolecules 2006, 39, 8219-8222 bekannt.

Eine weiteres kontrolliertes radikalische Polymerisationsverfahren ist die Reversible Chain Transfer Catalyzed Polymerization, wie sie in Polymer 2008, 49, 5177 offenbart ist.

Als weitere kontrollierte Polymerisationstechnik ist der Degenerative Chain Transfer mit Iod-Verbindungen wie zum Beispiel in Macromolecules 2008, 41, 6261, in Chem. Rev. 2006, 106, 3936-3962 oder in US 7 034 085 beschrieben, anwendbar.

Die kontrollierte radikalische Polymerisation in Gegenwart von Thioketonen wird beispielsweise in Chem. Commun., 2006, 835-837 und in Macromol. Rapid Commun., 2007, 28, 746-753 beschrieben.

Vorzugsweise sind zur Herstellung der bevorzugt erfindungsgemäß zum Einsatz kommenden strukturierten Copolymeren, alle aus dem Stand der Technik bekannten lebenden kontrollierten Polymerisationstechniken wie beispielsweise ATRP, RAFT, MADIX, NMP, GTP, die kontrollierte radikalische Polymerisation mit Tetraphenylethan, die kontrollierte radikalische Polymerisation mit 1,1-Diphenylethen, die kontrollierte radikalische Polymerisation mit Inifertern, die Reversible Chain Transfer Catalyzed Polymerization, die kontrollierte radikalische Polymerisation in Gegenwart von Thioketonen und die kontrollierte radikalische Polymerisation mit Organokobaltkomplexen einsetzbar.

Die bei den jeweiligen Polymerisationsverfahren verwendeten Initiatoren sind dem Fachmann bekannt. Für radikalische Polymerisationsprozesse können beispielsweise sowohl Azoinitiatoren wie Azodiisobutyronitril, Peroxidverbindungen, wie Dibenzoylperoxid oder Dicumylperoxid, als auch Persulfate wie Ammonium-, Natrium- und Kaliumperoxodisulfat eingesetzt werden.

Auch die für die lebenden, kontrollierten Polymerisationsverfahren verwendeten Initiatoren, Polymerisationsregler und Katalysatoren sind dem Fachmann bekannt.

Initiatoren für "Atom Transfer Radical Polymerization" sind z. B. Halogenalkane mit 1 bis 10 C-Atome, wie Tetrabromkohlenstoff und 1,1,1-Trichlorethan; Halogenalkohole mit 2 bis 10 C-Atome, wie 2,2,2-Trichlorethanol; 2-Halogencarbonsäure und deren Ester mit 2 bis 20 C-Atome, wie Chloressigsäure, 2-Brompropionsäure, 2-Brompropionsäuremethylester, 2-Chlorpropionsäuremethylester, 2-Bromisobuttersäureethylester und 2-Chlorisobuttersäureethylester; 2-Halogencarbonitrile mit 2 bis 10 C-Atome, wie 2-Chloracetonitril und 2-Brompropionitril; Alkyl- und Arylsulfonsäurechloride mit 2 bis 10 C-Atome, wie Methansulfonsäurechlorid und Benzolsulfonsäurechlorid; und 1-Aryl-1-halogenalkane mit 7 bis 20 C-Atomen, wie zum Beispiel Benzylchlorid, Benzylbromid und 1-Brom-1-phenylethan. Katalysatoren für ATRP sind zum Beispiel Kupferchlorid- oder -bromidkomplexe mit stickstoffhaltigen Liganden wie 2,2'-Bipyridin oder N,N,N',N",N"-Pentamethyldiethylentriamin, die auch *in situ* aus Kupfermetall, Ligand und Initiator erzeugt werden können. Weitere Katalysatoren sind in Chem. Rev. 2001, 101, 2921 und in Prog. Polym. Sci. 32 (2007) 93-146 sowie in Chem. Rev. 2007, 107, 2270-2299 aufgeführt.

Weiterhin ist es Stand der Technik, bei einigen Polymerisationsverfahren Addukte des Initiators mit dem Polymerisationsregler einzusetzen, wie zum Beispiel Alkoxyamine für das NMP-Verfahren. Beispiele hierfür sind in Chem. Rev. 2001, 101, 3661, "V. Approaches to Alkoxyamines" oder in Angewandte Chemie Int. Ed. 2004, 43, 6186 angegeben.

Weiterhin ist es möglich, Initiatoren/Regler "in situ" zu bilden, wie es z.B: in Macromol. Rapid Commun. 2007, 28, 147 für das NMP-Verfahren beschrieben ist.

Weitere Beispiele für Initiatoren/Regler für das NMP-Verfahren sind zum Beispiel 2,2,6,6-Tetramethylpiperidinoxyl (TEMPO) oder N-*tert*-Butyl-N-[1-diethylphosphono-(2,2-dimethylpropyl)]nitroxyl sowie die in ACS Symposium Series 2009, 1024 (Controlled/Living Radical Polymerization: Progress in RAFT, DT, NMP & OMRP), 245-262 und in WO 96/24620 und DE 60 2004 008967 aufgeführten Verbindungen.

Beim GTP-Verfahren können als Initiatoren Silylketenacetale wie zum Beispiel [(1-Methoxy-2-methyl-1-propenyl)oxy]trimethylsilan verwendet werden. Weitere Beispiele sind in US 4822859*,* US 4780554 und EP 0184692 B1 zu finden.

Für GTP werden als Katalysatoren Fluoride, die in US 4659782 beschrieben werden, oder Oxyanionen, die in US 4588795 beschrieben werden, verwendet. Ein bevorzugter Katalysator für GTP ist Tetrabutylammonium-*m*-chlorobenzoat.

Als Regler für das RAFT-Verfahren kommen beispielsweise Thiocarbonsäureester, Thiocarbamate oder Xanthogensäureester zum Einsatz, die oft in Kombination mit Radikalinitiatoren wie beispielsweise Azoinitiatoren, Peroxidverbihdungen oder Persulfaten eingesetzt werden.

Katalysatoren für die kontrollierte radikalische Polymerisation mit Organokobaltkomplexen sind beispielsweise in Chem. Rev. 2001, 101, 3611 aufgeführt.

Weitere Beispiele für die für die lebenden, kontrollierten Polymerisationsverfahren verwendeten Initiatoren, Polymerisationsregler und Katalysatoren sind in der oben angeführten Literatur zu den Polymerisationstechniken genannt. Auch der Einsatz sog. dual- bzw. heterofunktionaler Initiatoren, die beispielsweise in Prog. Polym. Sci. 31 (2006) 671-722 beschrieben sind, ist möglich.

Die aufgeführten Polymerisationen können lösemittelfrei in Substanz oder in organischen Lösemitteln und/oder Wasser erfolgen.

Bei Verwendung von Lösemitteln kann die Polymerisation als klassische Lösemittelpolymerisation, bei der das Polymer im Lösemittel gelöst ist, oder als Emulsions- oder Miniemulsionspolymerisation, wie sie zum Beispiel in Angewandte Chemie Int. Ed. 2004, 43, 6186 und Macromolecules 2004, 37, 4453 beschrieben wird, durchgeführt werden.

Das erhaltene Emulsions- bzw. Miniemulsionspolymere kann durch Salzbildung wasserlöslich gemacht werden, so dass eine homogene Polymerlösung entsteht. Die Copolymeren können jedoch nach der Versalzung immer noch wasserunlöslich sein.

Dabei sind die erhaltenen Copolymeren nicht zwangsläufig über den Polymerisationsregler als Endgruppe definiert. Die Endgruppe kann beispielsweise nach der Polymerisation ganz oder teilweise abgespalten werden. So ist es zum Beispiel möglich, die Nitroxylendgruppe der Copolymeren, welche mittels NMP hergestellt wurden, thermisch durch Erhöhung der Temperatur über die Polymerisationstemperatur hinaus abzuspalten. Diese Abspaltung des Polymerisationsreglers kann beispielsweise auch durch Zugabe weiterer chemischer Verbindungen wie Polymerisationsinhibitoren, beispielsweise Phenolderivaten, oder durch ein Verfahren wie es in Macromolecules 2001, 34, 3856 beschrieben ist, geschehen.

Ein schwefelhaltiger RAFT-Regler kann thermisch durch Erhitzen der Copolymeren abgespalten, durch Zugabe von Oxidationsmitteln wie Wasserstoffperoxid, Persäuren, Ozon oder anderen Bleichmitteln vom Copolymeren entfernt oder mit Nucleophilen wie Aminen unter Ausbildung einer Thiolendgruppe umgesetzt werden.

Weiterhin lassen sich die durch ATRP erzeugten Halogenendgruppen durch Eliminierungsreaktionen abspalten oder durch Substitutionsreaktionen in andere Endgruppen umwandelt. Beispiele für solche Transformationen sind in Chem. Rev. 2001, 101, 2921 aufgeführt.

Die Offenbarung dieser Polymerisationsverfahren in der jeweiligen Publikation gilt auch als Teil der vorliegenden Offenbarung.

Ein weiterer Gegenstand der vorliegenden Erfindung ist die Herstellung der erfindungsgemäß zum Einsatz kommenden Copolymeren (4) durch eine lebende, kontrollierte, radikalische Polymerisation oder durch Gruppentransferpolymerisation.

Die so erhaltenen Copolymeren eigenen sich vorzüglich, die Verträglichkeit von an sich unverträglichen Polyolen oder durch Zugabe von wenigstens einem Zusatz- und/oder Hilfsstoff (3) flüssiger Form unverträglich werdenden Polyolen als Reaktionskomponenten für die Herstellung von Polyurethanen zu gewährleisten.

Die Unverträglichkeit der Polyolkomponente (1) mit der Polyolkomponente (2) kann u. a. durch deren unterschiedliches Molekulargewicht, deren unterschiedlichen strukturellen Aufbau und/oder deren unterschiedlicher Polarität bedingt sein.

So sind bekannterweise oligomere oder polymere Polyalkylenoxid-Polyole mit kurzkettigen Polyolen unverträglich. Zu einer Entmischung neigen auch Polyolevon isocyanatreaktiven, oligomeren bzw. polymeren Polyalkylenoxiden, sofern sie aus unterschiedlichen Alkylenoxiden aufgebaut sind oder unterschiedliche Anteile derselben Art Alkylenoxide aufweisen, wie z. B. Polyethylenoxide und Polypropylenoxiden mit vergleichbaren Molekulargewichten bzw. Polyether aus Ethylenoxid und Propylenoxid mit jeweils ungefähr derselben Anzahl von Struktureinheiten aber unterschiedlichen Anteilen des Ethylenoxids und Propylenoxid.

Dasselbe gilt für Polyester- oder Polyether-Polyester-Polyole.

Die Problematik besteht analog auch für andere Typen von polymeren Polyolen, beispielsweise Polyacrylat-Polyole d. h. Acrylat-Copolymere, die Hydroxygruppen aufweisen, oder hydroxyfunktionelles Polybutadien.

Eine Entmischungsneigung der Polyole kann auch durch Zugabe von wenigstens einem weiteren Polyol und/oder - wie bereits erwähnt - durch Zugabe eines Zusatz- oder Hilfsstoffes gesteigert werden.

Mit Hilfe des erfindungsgemäßen, zum Einsatz kommenden Vermittleradditivs (4) gelingt es, solche auf unterschiedlichen Ursachen beruhende Entmischungstendenzen zu beheben und lagerstabile, einphasige Zusammensetzungen der Polyolkomponenten (1) und (2) mit ggf. zugesetzten Zusatz- und/oder Hilfsstoffen bei 20°C ab deren Vermischung bis zu deren weiteren reaktiven Umsetzung mit der Polyisocyanatkomponente, vorzugsweise um mindestens 50% länger, mindestens aber um 6 Stunden länger im Vergleich zu einer entsprechenden Zusammensetzung ohne Zugabe des Vermittleradditivs (4) zu gewährleisten.

Besonders bevorzugt wird die lagerstabile, einphasige Zusammensetzung bei 20°C um mindestens 100% länger, mindestens aber um 12 Stunden länger im Vergleich zu einer entsprechenden Zusammensetzung ohne Zugabe des Vermittleradditivs (4) gewährleistet.

Ganz besonders bevorzugt wir die lagerstabile, einphasige Zusammensetzung bei 20°C sogar um mindestens 200% länger, mindestens aber um 24 Stunden länger im Vergleich zu einer entsprechenden Zusammensetzung ohne Zugabe des Vermittleradditivs (4) gewährleistet.

Die Polyolkomponente (1) enthält mindestens ein Polyol der allgemeinen Formel

HO-B*-OH,

worin B* für ein divalentes Radikal steht, das ausgewählt ist aus der Gruppe umfassend
(i) Alkylenradikale mit 2 bis 8 C-Atomen;
(ii) Radikale der Formel -CH₂-B'-CH₂-, in denen B' für eine der Gruppen 1a)-5a) 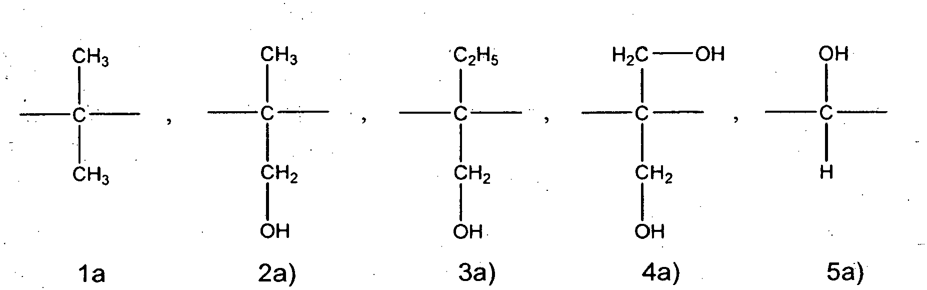 steht,
(iii) Radikale der Strukturformel -(B"-O)ₙ-B"-, in der B" ein Alkylenradikal mit 2 bis 4 C-Atomen und n eine ganze Zahl von 1 bis 20, vorzugsweise 1 bis 10 ist und
(iv) einen von einem Polyether, Polyester oder Polyether-Polyester abgeleiteten Rest, ggf. auch verzweigt und weitere OH-Gruppen enthaltend.

Vorzugsweise ist die Polyolkomponente (1) wenigstens ein kurzkettiges Polyol, vorzugsweise ein aliphatisches Polyol mit 2-8 C-Atomen und mindestens zwei Hydroxylgruppen, wenigstens ein Polyalkylenoxid mit wenigstens zwei endständigen Hydroxylgruppen oder wenigstens ein Polyesterpolyol und/oder Polyether-Polyesterpolyol.

Die zweite isocyanatreaktive Polyolkomponente (2) ist vorzugsweise ein Polyalkylenoxid mit wenigstens zwei endständigen Hydroxylgruppen, besonders bevorzugt ein Polyalkylenoxid, das sich von Alkylenoxiden mit 2 bis 4 C-Atomen, bevorzugt von Ethylenoxid und/oder Propylenoxid ableitet. Diese Polyalkylenoxide weisen je nach Startermolekül mit einem niedermolekularem Diol, Glycerin oder höherwertigem Alkohol 2, 3 oder mehr endständige Hydroxylgruppen und 5 bis 100 Alkylenoxideinheiten auf. In Spezialfällen können die Polyalkylenoxide auch mit Aminen, beispielsweise aliphatischen Diaminen, gestartet worden sein.

Sofern die höhermolekulare Polyolkomponente aus nicht nur einem bestimmten Alkylenoxid aufgebaut ist, kann das entsprechende Polyalkylenoxid einen statistischen oder blockartigen Aufbau aufweisen, wobei bei einem blockartigen Aufbau sich statistisch aufgebaute Blöcke mit Blöcken aus jeweils nur einem bestimmten Alkylenoxid abwechseln können.

Weiterhin bevorzugt sind als Polyolkomponente (2) Polyesterpolyole und/oder Polyether/Polyester-Polyole sowie Polybutadien-Polyole, wobei sich vorzugsweise der Aufbau der Polyolkomponente (1) vom Aufbau der Polyolkomponente (2) unterscheidet.

Bevorzugt ist die erfindungsgemäße Zusammensetzung eine Mischung von miteinander unverträglichen Polyetherpolyolen mit Polyesterpolyolen oder miteinander unverträglichen unterschiedlichen Polyetherpolyolen untereinander oder miteinander unverträglichen unterschiedlichen Polyesterpolyolen untereinander.

Eine bevorzugte erfindungsgemäße Zusammensetzung weist als Polyolkomponente (1) ein Polyetherpolyol und als Polyolkomponente (2) ein Polyesterpolyol auf.

Eine besonders bevorzugte erfindungsgemäße Zusammensetzung weist als Polyolkomponente (1) ein Polyetherpolyol, in dem der Gewichtsanteil der Ethylenoxideinheiten bezogen auf die Masse an Ethylenoxid- und Propylenoxideinheiten höher als 65 Gew.% ist, und als Polyolkomponente (2) ein Polyetherpolyol, in dem der Gewichtsanteil der Propylenoxideinheiten bezogen auf die Masse an Ethylenoxid- und Propylenoxideinheiten höher als 65 Gew.% ist.

Eine ganz besonders bevorzugte erfindungsgemäße Zusammensetzung weist als Polyolkomponente (1) ein Polyetherpolyol, in dem der Gewichtsanteil der Ethylenoxideinheiten bezogen auf die Masse an Ethylenoxid- und Propylenoxideinheiten höher als 75 Gew.% ist, und als Polyolkomponente (2) ein Polyetherpolyol, in dem der Gewichtsanteil der Propylenoxideinheiten bezogen auf die Masse an Ethylenoxid- und Propylenoxideinheiten höher als 75 Gew.% ist.

Mit Hilfe des Vermittleradditivs (4), vorzugsweise in flüssiger Form, d. h. als Flüssigkeit an sich oder in gelöster Form, gelingt es, für das unverträgliche oder unverträglich gewordene Polyolgemisch durch einfaches Zumischen und einmaliges Durchmischen den Zeitraum der Phasenseparation bis zur Umsetzung der Polyole zu Polyurethanen zu verlängern.

Bevorzugt liegt das zugesetzte Copolymere (4) in der erhaltenen-Polyol-Mischung nicht in Form fester Partikel, sondern in flüssiger Form vor.

Zur Herstellung der erfindungsgemäßen Zusammensetzungen werden die Polyolkomponente (1) und die damit an sich unverträgliche oder durch den Zusatz wenigstens eines Hilfsstoffes und/oder Zusatzstoffes in flüssiger Form unverträglich gewordene Polyolkomponente (2) in Gegenwart des Vermittleradditivs (4) homogenisiert, vorzugsweise durch Schütteln, Rütteln oder Rühren.

Ggf. übliche Hilfsstoffe und/oder Zusatzstoffe, die bei der Herstellung von Polyurethanen Verwendung finden, können bei Bedarf damit schon mit eingemischt werden. Alternativ können diese Stoffe auch zu einem späteren Zeitpunkt unmittelbar vor bzw. bei der Umsetzung zu Polyurethanen zugegeben werden.

Beispiele für solche Hilfs- und Zusatzstoffe sind Katalysatoren und Beschleuniger (beispielsweise in Form von basischen Verbindungen wie tertiären Aminen oder in Form von metallorganischen Verbindungen wie Zinn-Organylen), Verschäumungsmittel (physikalische Verschäumungsmittel wie z. B. Kohlenwasserstoffe oder halogenierte Kohlenwasserstoffe, sowie chemische Verschäumungsmittel wie z. B. Wasser oder Carbonsäuren), Schaumstabilisatoren, Antischaummittel, Entlüfter, Viskositätsreduzierer, Thixotropiermittel, Kettenverlängerer und -vernetzer, Wärmestabilisatoren, Flammschutzmittel, Netz- und Dispergiermitteln, Stabilisatoren, wie UV-Stabilisatoren oder andere Lichtschutzmittel, Hydrolysestabilisatoren, Oxidationsinhibitoren, Farbstoffe, Pigmente, organische oder anorganische Füllstoffe, Prozessadditive, Haftvermittler, Trennmittel, Weichmacher, Antistatika, Wasser, Lösemittel. Sofern sie in flüssiger Form vorliegen, können sie der erfindungsgemäßen Zusammensetzung bereits zugesetzt werden.

In einer bevorzugten Ausführungsform der erfindungsgemäßen Zusammensetzungen beträgt, bezogen auf 100 Gew.% der Zusammensetzung, der Anteil
der Polyolkomponente (1) von 10 bis 90 Gew.%,
der Polyolkomponente (2) von 10 bis 90 Gew.%,
des Vermittleradditivs (4) von 0,25 bis 7,5 Gew.%,
der Zusatz- und/oder Hilfsstoffe (3) von 0,1 - 25 Gew.%,
wobei die Gesamtmenge der Zusammensetzung immer 100 Gew.% ergeben muss und der Anteil der Komponente (1) bis (4) in der Zusammensetzung wenigstens 80 Gew.%, bevorzugt wenigstens 95 Gew.% beträgt.

Besonders bevorzugt ist hierbei eine erfindungsgemäße Zusammensetzung, in der, bezogen auf 100 Gew.% der Zusammensetzung, der Anteil des Vermittleradditivs (4) 0,5 bis 4 Gew.% beträgt.

In einer ganz besonders bevorzugten Ausführungsform der erfindungsgemäßen Zusammensetzungen beträgt, bezogen auf 100 Gew.% der Zusammensetzung, der Anteil
der Polyolkomponente (1) von 20 bis 80 Gew.%,
der Polyolkomponente (2) von 20 bis 80 Gew.%,
des Vermittleradditivs (4) von 0,5 bis 4 Gew.%,
der Zusatz- und/oder Hilfsstoffe (3) von 0,1-15 Gew.%,
wobei die Gesamtmenge der Zusammensetzung immer 100 Gew.% ergeben muss und der Anteil der Komponenten(1) - (4) in der Zusammensetzung mindestens 95 Gew.% beträgt.

Besonders bevorzugt sind erfindungsgemäße Zusammensetzungen, in denen die Komponente (3) weniger als 5 Gew.%, bezogen auf 100 Gew.% der Zusammensetzung, beträgt und vorzugsweise nur aus mindestens einem Lösungsmittel besteht.

Ganz besonders bevorzugt sind erfindungsgemäße Zusammensetzungen, in denendie Komponente (3) zunächst weitgehend nicht vorhanden, d. h. der Anteil in der Zusammensetzung kleiner 0,1 Gew.%, bezogen auf 100 Gew.% der Zusammensetzung, oder überhaupt nicht vorhanden ist.

Vorzugsweise beträgt in den erfindungsgemäßen Zusammensetzungen aus (1) bis (4) das molare Verhältnis von sauren Gruppen, ggf. ganz oder teilweise in ihrer versalzten Form, zu den aus den Polyol-Komponenten (1) und (2) stammenden Hydroxygruppen unter 0,25.

Die erfindungsgemäßen Zusammensetzungen können als stabile Polyolkomponente zur Herstellung von Polyurethanen eingesetzt werden, die durch deren Umsetzung mit organischen Polyisocyanat-Verbindungen in Gegenwart geeigneter Katalysatoren erfolgt.

Dem Fachmann ist bekannt, dass es je nach gewählten Reaktionsbedingungen bei der Reaktion von Polyolen mit Polyisocyanaten sowohl Polyurethane als auch Polyisocyanuratee und/oder Polyharnstoffe gebildet werden können. Im Sinne der vorliegenden Erfindung sind daher Polyisocyanurate und Polyharnstoffe im Begriff "Polyurethane" mit umfasst.

Beispiele für geeignete organische Polyisocyanate sind organische Verbindungen mit mindestens zwei Isocyanatgruppen. Diese Verbindungen sind zur Herstell- ung von Polyurethanen bekannt. Geeignete organische Polyisocyanate umfassen Kohlenwasserstoff-Diisocyanate, wie Alkylen- und Arylendiisocyanate, sowie bekannte Triisocyanate.

Geeignete Polyisocyanate sind z.B. 1,2-Diisocyanatethan, 1,3-Diisocyanatpropan, 1,2-Diisocyanatopropan, 1,4-Diisocyanatbutan, 1,5-Diisocyanatpentan, 1,6-Diisocyanathexan, Bis-(3-isocyanatpropyl)-ether, Bis-(3-isocyanatpropyl)-sulfid, 1,7-Di-isocyanatheptan, 1,5-Diisocyanat-2, 2-Dimethylpentan, 1,6-Diisocyanat-3-methoxyhexan, 1,8-Diisocyanatoctan, 1,5-Diisocyanat-2, 2,4-trimothylpentan, 1,9-Diisocyanatnonan, 1,10-Diisocyanat-propylether von 1,4-Butylenglykol, 1,11-Diisocyanatundocan, 1,12-Diisocvanaidodecan, Bis-(isocyanathexyl)-sulfid, 1,4-Diisocyanatbenzol, 2,4-Diisocyanattoluol, 2,6-Diisocyanattoluol, 2,4-Diisocyanat-1-chlorbenzol, 2,4-Diisocyanat-1-nitrobenzol und 2,5-Diisocyanat-1-nitrobenzol sowie Mischungen derselben. Weitere geeignete Verbindungen umfassen 4,4-Diphenylmethandiisocyanat, 1,5-Naphthalindiisocyanat, Isophorondiisocyanat und 1,4-Xyloldiisocyanat. Außerdem sind geeignete Verbindungen die modifizierten flüssigen MDI-Isocyanate der US PS 3 384 653 und verschiede quasi-Vorpolymerisate der US PSS 3 394 164, 3 644 457, 3 457 200 und 3 883 571.

Besonders bevorzugte Polyisocyanate sind Toluoldiisocyanat, Diphenylmethyldiisocyanat (in Form von "Monomer-MDI" oder "Polymer-MDI"), Isophorondiisocyanat, Hexamethylendiisocyanat sowie deren Oligomere.

Die Polyisocyanate können auch als verkappte Polyisocyanate eingesetzt werden, die erst bei Temperaturen über 100°C reagieren und ggf. bereits in den erfindungsgemäßen Zusammensetzungen vorliegen.

Geeignete Katalysatoren bzw. Verschäumungsmittel sind z. B. DOS 2730374 zu entnehmen.

Die Herstellung von Polyurethanen durch Umsetzung der erfindungsgemäßen Zusammensetzungen als gegen Phasenseparation stabilisierte, ggf. Zusatz- und/oder Hilfsstoff-haltige Polyolkomponenten mit Polyisocyanaten kann sowohl der Herstellung von Polyurethan-Schäumen als auch der Herstellung von ungeschäumten Polyurethan-Massen (CASE-Anwendungen) dienen; die Herstellung von Polyurethanen ist literaturbekannt und wird z.B. in R. Leppkes, "Die Bibliothek der Technik, Bd. 91: Polyurethane", Verlag moderne Industrie, Landsberg/Lech 1993, sowie in R. Herrington, K. Hock, "Flexible Polyurethane Foams", Dow Chemical Comp., Midland (USA) 1997, sowie in S. Lee, "The Huntsman Polyurethanes Book"; Huntsman Int. LLC, 2002, sowie in U. Meier-Westhues, "Polyurethane - Lacke, Kleb- und Dichtstoffe", Vincentz Network, 2007, sowie in G. Oertel, "Kunststoffhandbuch, Bd. 7: Polyurethane", Hanser Fachbuch, 2004, sowie in K. Uhlig, "Polyurethan-Taschenbuch", Hanser Fachbuchverlag, 2005 beschrieben.

Gegenstand der vorliegenden Erfindung ist daher auch die Verwendung der erfindungsgemäßen Zusammensetzungen als eine gegen Phasenseparation stabilisierte, ggf. Zusatz- und/oder Hilfsstoffhaltige Polyolkomponente zur Herstellung von Polyurethanen sowie ein Verfahren zur Herstellung von Polyurethanen, bei denen die erfindungsgemäßen Zusammensetzungen umfassend gegen Phasenseparation stabilisierte Polyolmischungen in Gegenwart von Katalysatoren mit organischen Polyisocyanaten zur Reaktion gebracht werden.

Eine weitere Verwendung einer erfindungsgemäßen Zusammensetzung ggf. nach Zugabe wenigstens eines weiteren Hilfs- und Zusatzstoffes in fester Form ausgewählt aus der Gruppe umfassend Flammschutzmittel, Antistatika, Pigmente und organische oder anorganische Füllstoffe, ggf. in Faserform, ist die Herstellung von ungeschäumten oder geschäumten Polyurethanen.

Gegenstand der vorliegenden Erfindung sind auch Polyurethanmassen, Polyurethankörper bzw. Polyurethanschäume, welche unter Einsatz einer erfingdungsgemäß en Zusammensetzung umfassend eine gegen Phasenseparation stabilisierten, ggf. Zusatz- und/oder Hilfsstoffe enthaltende Polyolmischunge durch Reaktion mit organischen Polyisocyanaten in Gegenwart von Katalysatoren hergestellt worden sind. Eine Anwendung dieser Polyurethanmassen, Polyurethankörper bzw. Polyurethaneschäume kann in allen Bereichen erfolgen, in denen solche Artikel eingesetzt werden, z.B. im Bereich der Konstruktionsteile bis hin zu Beschichtungen, Vergussmassen, Klebstoffen, Elastomeren, Dicht- und Dämmstoffen etc.

### Beispiele:

### I) Herstellung der Additive:

Die Molekulargewichte wurden mittels Gelpermeationschromatographie (GPC) bestimmt.

Die Kalibrierung erfolgt mit Polystyrol-Standards mit einem Molekulargewichten von M_{P} 1.000.000 bis 162.

Als Eluent wird Tetrahydrofuran p.A. mit 1 % Essigsäure verwendet.

Die folgenden Parameter werden bei der Doppelmessung eingehatten:

| | |
|---|---|
| Entgasung: | Online - Degasser |
| Durchfluß: | 1 ml/Min. |
| Analysenzeit: | 45 Minuten |
| Detektoren: | Refraktometer und UV-Detektor |
| Injektionsvolumen: | 100 µl - 200 µl |

Die Berechnung der Molmassenmittelwerte M_{w}; Mₙ und Mₚ sowie der Polydispersität M_{w}/Mₙ erfolgt softwaregestützt. Basislinienpunkte und Auswertegrenzen werden entsprechend der DIN 55672 Teil 1 festgelegt.

Der Restmonomergehalt wurde mittels Hochleistungsflüssigkeitschromatographie (high performance liquid chromatography, HPLC) bestimmt.

Struktur, Herstellung und Verwendung von O-Ethyl-S-(1-methoxycarbonylethyl)xanthat sind in Macromol. Rapid Commun. 2001, 22, 1497 beschrieben.

### Copolymer 1:

In einem Dreihalskolben mit Rührer, Rückflusskühler und Gaseinlass werden unter Stickstoff-Strom 142,7 g 1-Methoxy-2-propylacetat und 38,1g 2-[N-*tert*-butyl-N-[1-diethylphosphono-(2,2-dimethylpropyl)]nitroxy]-2-methylpropansäure sowie 104,0 g Styrol vorgelegt und auf 120 °C erwärmt. Man rührt noch 2,5 h bei 120 °C (Umsatz des Styrols hiernach: 62,2% gemäß HPLC).

Im Anschluss werden bei 120°C mittels eines Tropftrichters 72,0 g Acrylsäure innerhalb von 10 min zudosiert. Man rührt noch 6 h bei 120°C nach (Gesamtumsatz: 98,5 % gemäß HPLC). Produkt: Mₙ=2530 g/mol (gemäß GPC).

### Copolymer 2:

In einem Dreihalskolben mit Rührer, Rückflusskühler und Gaseinlass werden unter Stickstoff-Strom 119,3 g 1-Methoxy-2-propylacetat und 38,1g 2-[N-*tert*-butyl-N-[1-diethylphosphono-(2,2-dimethylpropyl)]nitroxy]-2-methylpropansäure sowie 83,2 g Styrol vorgelegt und auf 120 °C erwärmt. Man rührt noch 2,5 h bei 120 °C (Umsatz des Styrols hiernach: 69,0 % gemäß HPLC). Im Anschluss werden bei 120°C mittels eines Tropftrichters 57,6 g Acrylsäure innerhalb von 10 min zudosiert. Man rührt noch 6 h bei 120°C nach (Gesamtumsatz: 97,2 % gemäß HPLC). Produkt: Mₙ=2720 g/mol (gemäß GPC).

### Copolymer 3:

In einem Dreihalskolben mit Rührer, Rückflusskühler und Gaseinlass werden unter Stickstoff-Strom 131,6 g 1-Methoxy-2-propylacetat und 20,8 g O-Ethyl-S-(1-methoxycarbonylethyl)xanthat vorgelegt und auf 85 °C erwärmt. Innerhalb von 90 min werden bei dieser Temperatur 104,0 g Styrol und 0,3 g darin gelöstes 2,2'-Azobis[2-methylbutyronitril] zudosiert. Man rührt noch 4 h bei 85 °C (Umsatz des Styrols hiernach: 52,0 % gemäß HPLC). Im Anschluss werden bei 85°C noch 72,0 g Acrylsäure und 0,3 g darin gelöstes 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 85°C gerührt. Dieser Vorgang wird im Abstand von 1 h noch 2 Mal wiederholt (Gesamtumsatz: 97,8 % gemäß HPLC). Produkt: Mₙ=2430 g/mol (gemäß GPC).

### Copolymer 4:

In einem Dreihalskolben mit Rührer, Rückflusskühler und Gaseinlass werden unter Stickstoff-Strom 108,1 g 1-Methoxy-2-propylacetat und 20,8 g O-Ethyl-S-(1-methoxycarbonylethyl)xanthat vorgelegt und auf 85 °C erwärmt. Innerhalb von 90 min werden bei dieser Temperatur 83,2 g Styrol und 0,3 g darin gelöstes 2,2'-Azobis[2-methylbutyronitril] zudosiert. Man rührt noch 4 h bei 85 °C (Umsatz des Styrols hiernach: 49,0 % gemäß HPLC).

Im Anschluss werden bei 85°C noch 57,6 g Acrylsäure und 0,3 g darin gelöstes 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 85°C gerührt. Dieser Vorgang wird im Abstand von 1 h noch 2 Mal wiederholt (Gesamtumsatz: 97,9 % gemäß HPLC). Produkt: Mₙ=2000 g/mol (gemäß GPC).

### Copolymer 5:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 85 °C erwärmt. Innerhalb von 90 min werden bei dieser Temperatur 156,0 g Styrol und 0,3 g darin gelöstes 2,2'-Azobis[2-methylbutyronitril] zudosiert. Man rührt noch 4 h bei 85 °C (Umsatz des Styrols hiernach: 45,0 % gemäß HPLC). Im Anschluss werden bei 85°C nach 72,0 g Acrylsäure und 0,3 g darin gelöstes 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 85°C gerührt. Dieser Vorgang wird im Abstand von 1 h noch 2 Mal wiederholt (Gesamtumsatz: 96,7 % gemäß HPLC). Produkt: Mₙ=3060 g/mol (gemäß GPC).

### Copolymer 6:

In einem Dreihalskolben mit Rührer, Rückflusskühler und Gaseinlass werden unter Stickstoff-Strom 100,8 g 1-Methoxy-2-propylacetat und 10,4 g O-Ethyl-S-(1-methoxycarbonylethyl)xanthat vorgelegt und auf 85 °C erwärmt. Mit einer Dosierrate von 1,7 mL/min werden bei dieser Temperatur 104,0 g Styrol und 0,15 g darin gelöstes 2,2'-Azobis[2-methylbutyronitril] zudosiert. Man rührt noch 30 min bei 85 °C (Umsatz des Styrols hiernach: 34,4 % gemäß HPLC). Im Anschluss werden bei 85°C noch 36,0 g Acrylsäure und 0,15 g darin gelöstes 2,2'-Azobis[2-methylbutyronitril] mit einer Rate von 2,4 mL/min zudosiert. Man rührt noch 30 min bei 85°C nach. Hiernach werden 0,15 g 2,2'-Azobis[2-methylbutyronitril] zugesetzt und weitere 30 min bei 85°C gerührt. Dieser Vorgang wird im Abstand von 30 min noch 4 Mal wiederholt (Gesamtumsatz: 96,8 % gemäß HPLC). Produkt: Mₙ=2770 g/mol (gemäß GPC).

### Copolymer 7:

In einem Dreihalskolben mit Rührer, Rückflusskühler und Gaseinlass werden unter Stickstoff-Strom 110,4 g 1-Methoxy-2-propylacetat und 10,4 g O-Ethyl-S-(1-methoxycarbonylethyl)xanthat vorgelegt und auf 85 °C erwärmt. Mit einer Dosierrate von 1,7 mL/min werden bei dieser Temperatur 104,0 g Styrol und 0,15 g darin gelöstes 2,2'-Azobis[2-methylbutyronitril] zudosiert. Man rührt noch 30 min bei 85 °C (Umsatz des Styrols hiernach: 37,4 % gemäß HPLC). Im Anschluss werden bei 85°C noch 50,4 g Acrylsäure und 0,15 g darin gelöstes 2,2'-Azobis[2-methylbutyronitril] mit einer Rate von 2,4 mL/min zudosiert. Man rührt noch 30 min bei 85°C nach. Hiernach werden 0,15 g 2,2'-Azobis[2-methylbutyronitril] zugesetzt und weitere 30 min bei 85°C gerührt. Dieser Vorgang wird im Abstand von 30 min noch 4 Mal wiederholt (Gesamtumsatz: 96,9 % gemäß HPLC). Produkt: Mₙ=2620 g/mol (gemäß GPC).

### Copolymer 8:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 85 °C erwärmt. Mit einer Dosierrate von 1,7 mL/min werden bei dieser Temperatur 156,0 g Styrol und 0,3 g darin gelöstes 2,2'-Azobis[2-methylbutyronitril] zudosiert. Man rührt noch 30 min bei 85 °C (Umsatz des Styrols hiernach: 37,7 % gemäß HPLC). Im Anschluss werden bei 85°C noch 72,0 g 2-Carboxyethylacrylat und 0,3 g darin gelöstes 2,2'-Azobis[2-methylbutyronitril] mit einer Rate von 2,4 mL/min zudosiert. Man rührt noch 30 min bei 85°C nach. Hiernach werden 0,3 g 2,2'-Azobis[2-methylbutyronitril] zugesetzt und weitere 30 min bei 85°C gerührt. Dieser Vorgang wird im Abstand von 30 min noch 4 Mal wiederholt. Im Anschluss wird auf 120°C erwärmt, es werden weitere 0,3 g 2,2'-Azobis[2-methylbutyronitril] zugegeben und noch 3 h bei 120°C gerührt. Auch dieser Schritt wird nochmals wiederholt (Gesamtumsatz: 92,9 % gemäß HPLC). Produkt: Mₙ=1930 g/mol (gemäß GPC).

### Copolymer 9:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 85 °C erwärmt.

Innerhalb von 90 min werden bei dieser Temperatur eine Mischung aus 148,2 g Styrol, 7,8 g Benzylacrylat und 0,3 g darin gelöstem 2,2'-Azobis[2-methylbutyronitril] zudosiert. Man rührt noch 4 h bei 85 °C (Umsatz der Monomere hiernach: 49,2 % gemäß HPLC). Im Anschluss werden bei 85°C noch 72,0 g Acrylsäure und 0,3 g darin gelöstes 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 85°C gerührt. Dieser Vorgang wird im Abstand von 1 h noch 2 Mal wiederholt (Gesamtumsatz: 96,9 % gemäß HPLC). Produkt: Mₙ=3020 g/mol (gemäß GPC).

### Copolymer 10:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 85 °C erwärmt. Innerhalb von 90 min werden bei dieser Temperatur eine Mischung aus 148,2 g Styrol, 7,8 g Benzylmethacrylat und 0,3 g darin gelöstem 2,2'-Azobis[2-methylbutyronitril] zudosiert. Man rührt noch 4 h bei 85 °C (Umsatz der Monomere hiernach: 43,1 % gemäß HPLC). Im Anschluss werden bei 85°C noch 72,0 g Acrylsäure und 0,3 g darin gelöstes 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 85°C gerührt. Dieser Vorgang wird im Abstand von 1 h noch 3 Mal wiederholt (Gesamtumsatz: 96,4 % gemäß HPLC). Produkt: Mₙ=3100 g/mol (gemäß GPC).

### Copolymer 11:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 85 °C erwärmt. Innerhalb von 90 min werden bei dieser Temperatur eine Mischung aus 147,5 g Styrol, 3,0 g Ethyltriglycolmethacrylat, 5,5 g Methylmethacrylat und 0,3 g darin gelöstem 2,2'-Azobis[2-methylbutyronitril] zudosiert. Man rührt noch 4 h bei 85 °C (Umsatz der Monomere hiernach: 42,7 % gemäß HPLC). Im Anschluss werden bei 85°C noch 72,0 g Acrylsäure und 0,3 g darin gelöstes 2,2'-Azobis[2-methylbutyronitril] innerhalb von 30 min zudosiert. Man rührt noch 2 h bei 85°C nach.

Hiernach werden 0,3 g 2,2'-Azobis[2-methylbutyronitril] zugesetzt und 1 weitere Stunde bei 85°C gerührt. Dieser Vorgang wird im Abstand von 1 h noch 3 Mal wiederholt (Gesamtumsatz: 97,1 % gemäß HPLC). Produkt: Mₙ=3220 g/mol (gemäß GPC).

### Copolymer 12:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 85 °C erwärmt. Innerhalb von 90 min werden bei dieser Temperatur 156,0 g Styrol und 0,3 g darin gelöstes 2,2'-Azobis[2-methylbutyronitril] zudosiert. Man rührt noch 4 h bei 85 °C (Umsatz des Styrols hiernach: 45,4 % gemäß HPLC). Im Anschluss werden bei 85°C noch eine Kombination aus 68,5 g Acrylsäure, 3,5 g Butylacrylat und 0,3 g darin gelöstem 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 85°C gerührt. Dieser Vorgang wird im Abstand von 1 h noch 3 Mal wiederholt (Gesamtumsatz: 97,1 % gemäß HPLC). Produkt: Mₙ=3100 g/mol (gemäß GPC).

### Copolymer 13:

In einem Dreihalskolben mit Rührer, Rückflusskühler und Gaseinlass werden unter Stickstoff-Strom 166,3 g 1-Methoxy-2-propylacetat und 20,8 g O-Ethyl-S-(1-methoxycarbonylethyl)xanthat vorgelegt und auf 110 °C erwärmt. Innerhalb von 90 min werden bei dieser Temperatur 156,0 g Styrol und 0,3 g darin gelöstes 2,2'-Azobis[2-methylbutyronitril] zudosiert. Man rührt noch 1,5 h bei 110 °C und gibt dann weitere 0,15 g 2,2'-Azobis[2-methylbutyronitril] hinzu. Dieser Vorgang wird noch 3 Mal wiederholt (Umsatz des Styrols hiernach: 95,4 % gemäß HPLC). Im Anschluss werden bei 110°C noch 72,0 g Acrylsäure und 0,3 g darin gelöstes 2,2'-Azobis[2-methylbutyronitril] innerhalb von 30 min zudosiert. Man rührt noch 2 h bei 85°C nach. Hiernach werden 0,3 g 2,2'-Azobis[2-methylbutyronitril] zugesetzt und 1 weitere Stunde bei 110°C gerührt. Dieser Vorgang wird im Abstand von 1 h noch 2 Mal wiederholt (Gesamtumsatz: 97,1 % gemäß HPLC). Produkt: Mₙ=2910 g/mol (gemäß GPC).

**Tabelle I: Versalzungskomponenten**

| *Name* | *Beschreibung* |
|---|---|
| Amin 1 | primäres Polyethermonoamin, durchschnittliches Molekulargewicht ca. 2000, Verhältnis Propylenoxid zu Ethylenoxid: 10/31 |
| Amin 2 | Stearylaminpolyglycolether, Ethoxylierungsgrad: ca. 15 mol Ethylenoxid pro mol Stearylamin |
| Amin 3 | Ethylendiamin-basiertes Ethylenoxid-Propylenoxid-Blockcopolymer, Anteil Propylenoxid-Einheiten ca. 70 mol%, Anteil Ethylenoxid-Einheiten ca. 30 mol%, Mₙ ca. 5900 |
| Amin 4 | Oleylaminpolyglycolether, Ethoxylierungsgrad: ca. 10 mol Ethylenoxid pro mol Oleylamin |
| Amin 5 | Kokosaminpolyglycolether, Ethoxylierungsgrad: ca. 5 mol Ethylenoxid pro mol Kokosamin |
| Amin 6 | Kokosaminpolyglycolether, Ethoxylierungsgrad: ca. 10 mol Ethylenoxid pro mol Kokosamin |
| Amin 7 | Polyethylenimin, Molekulargewicht ca. 300 |

### Verträglichkeitsvermittler A:

In einem Dreihalskolben mit Rührer, Rückflusskühler und Gaseinlass werden unter Stickstoff-Strom 20,0 g Copolymer 1, 36,5 g Amin 4 und 12,8g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler B:

In einem Dreihalskolben mit Rührer, Rückflusskühler und Gaseinlass werden unter Stickstoff-Strom 20,0 g Copolymer 2, 29,3 g Amin 4 und 9,7 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler C:

In einem Dreihalskolben mit Rührer, Rückflusskühler und Gaseinlass werden unter Stickstoff-Strom 20,0 g Copolymer 3, 39,5 g Amin 4 und 14,1 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler D:

In einem Dreihalskolben mit Rührer, Rückflusskühler und Gaseinlass werden unter Stickstoff-Strom 20,0 g Copolymer 4, 38,4 g Amin 4 und 12,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler E:

In einem Dreihalskolben mit Rührer, Rückflusskühler und Gaseinlass werden unter Stickstoff-Strom 20,0 g Copolymer 5, 31,4 g Amin 4 und 10,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler F:

In einem Dreihalskolben mit Rührer, Rückflusskühler und Gaseinlass werden unter Stickstoff-Strom 20,0 g Copolymer 5, 27,0 g Amin 4 und 8,7 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler G:

In einem Dreihalskolben mit Rührer, Rückflusskühler und Gaseinlass werden unter Stickstoff-Strom 20,0 g Copolymer 5, 40,5 g Amin 4 und 14,5 g 1 -Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler H:

In einem Dreihalskolben mit Rührer, Rückflusskühler und Gaseinlass werden unter Stickstoff-Strom 20,0 g Copolymer 5, 39,5 g Amin 2 und 14,1 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler I:

In einem Dreihalskolben mit Rührer, Rückflusskühler und Gaseinlass werden unter Stickstoff-Strom 20,0 g Copolymer 5, 29,0 g Amin 6 und 9,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler J:

In einem Dreihalskolben mit Rührer, Rückflusskühler und Gaseinlass werden unter Stickstoff-Strom 20,0 g Copolymer 5, 18,6 g Amin 5 und 5,1 g1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler K:

In einem Dreihalskolben mit Rührer, Rückflusskühler und Gaseinlass werden unter Stickstoff-Strom 20,0 g Copolymer 3, 31,4 g Amin 4 und 10,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler L:

In einem Dreihalskolben mit Rührer, Rückflusskühler und Gaseinlass werden unter Stickstoff-Strom 20,0 g Copolymer 6, 25,8 g Amin 4 und 8,2 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler M:

In einem Dreihalskolben mit Rührer, Rückflusskühler und Gaseinlass werden unter Stickstoff-Strom 20,0 g Copolymer 7, 33,2 g Amin 4 und 11,4 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler N:

In einem Dreihalskolben mit Rührer, Rückflusskühler und Gaseinlass werden unter Stickstoff-Strom 20,0 g Copolymer 8, 31,4 g Amin 4 und 10,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler O:

In einem Dreihalskolben mit Rührer, Rückflusskühler und Gaseinlass werden unter Stickstoff-Strom 20,0 g Copolymer 8, 15,8 g Amin 4 und 3,9 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler P:

In einem Dreihalskolben mit Rührer, Rückflusskühler und Gaseinlass werden unter Stickstoff-Strom 15,0 g Copolymer 5, 62,7 g Amin 1 und 24,9 g 1-Methoxy-2-propylacetat vorgelegt und bei 80°C 60 min lang gerührt. Das Produkt fällt als 70%-ige Lösung der Wirksubstanz in 1-Methoxy-2-propylaceta an.

### Verträglichkeitsvermittler Q:

In einem Dreihalskolben mit Rührer, Rückflusskühler und Gaseinlass werden unter Stickstoff-Strom 20,0 g Copolymer 5, 31,4 g Amin 1 und 10,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler R:

In einem Dreihalskolben mit Rührer, Rückflusskühler und Gaseinlass werden unter Stickstoff-Strom 4,0 g Copolymer 5, 35,8 g Amin 3 und 54,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler S:

In einem Dreihalskolben mit Rührer, Rückflusskühler und Gaseinlass werden unter Stickstoff-Strom 20,0 g Copolymer 9, 31,4 g Amin 1 und 10,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler T:

In einem Dreihalskolben mit Rührer, Rückflusskühler und Gaseinlass werden unter Stickstoff-Strom 20,0 g Copolymer 10, 27,0 g Amin 4 und 8,7 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler U:

In einem Dreihalskolben mit Rührer, Rückflusskühler und Gaseinlass werden unter Stickstoff-Strom 20,0 g Copolymer 11, 27,0 g Amin 4 und 8,7 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler V:

In einem Dreihalskolben mit Rührer, Rückflusskühler und Gaseinlass werden unter Stickstoff-Strom 20,0 g Copolymer 7, 30,3 g Amin 4 sowie 0,20 g Amin 7 und 10,2 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler W:

In einem Dreihalskolben mit Rührer, Rückflusskühler und Gaseinlass werden unter Stickstoff-Strom 20,0 g Copolymer 12, 27,0 g Amin 4 und 8,7 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Verträglichkeitsvermittler X:

In einem Dreihalskolben mit Rührer, Rückflusskühler und Gaseinlass werden unter Stickstoff-Strom 20,0 g Copolymer 13, 29,0 g Amin 6 und 9,6 g 1-Methoxy-2-propylacetat vorgelegt und bei 80°C 60 min lang gerührt. Das Produkt fällt als 70%-ige Lösung der Wirksubstanz in 1-Methoxy-2-propylacetat an.

### Vergleichsbeispiel (analog Beispiel 1 aus DE 102008000243):

28,0 g eines Polyethermonools (Butanol-gestartet, Molekulargewicht ca. 1.700 g/mol, Gewichtsanteil Ethylenoxid-Einheiten: 0%, Gewichtsanteil Propylenoxid-Einheiten: 100%) wurden mit 36,0 g eines Polyetherdiols (Molekulargewicht ca. 2000 g/mol, Gewichtsanteil Ethylenoxid-Einheiten: 10%, Gewichtsanteil Propylenoxid-Einheiten: 90%) und 24,0 g eines Polyethermonools (Methanol-gestartet, Molekulargewicht ca. 1000 g/mol, Gewichtsanteil Ethylenoxid-Einheiten: 100%, Gewichtsanteil Propylenoxid-Einheiten: 0%) gemischt und 13,0 g DesmodurN 3200 (technisches Isocyanat auf Basis HDI-Biuret der Firma Bayer MaterialScience AG) versetzt. Anschließend wurden noch 100,0 g Propylencarbonat zugesetzt. Diese Mischung wurde auf 100 °C erhitzt und schließlich mit 0,2 g einer 10%-igen Lösung von Dibutylzinndilaurat in Xylol (Katalysator) versetzt. Anschließend wurde noch 4 Stunden bei 100 °C gerührt. Das Produkt fällt als 50%-ige Lösung der Wirksubstanz in Propylencarbonat an.

### II) Anwendungstechnische Abprüfung der Additive:

Folgende Polyole wurden in den Beispielen zum Einsatz gebracht:

**Tabelle II: Eingesetzte Polyole**

| Bezeichnung | Beschreibung |
|---|---|
| PEG-200 | Polyethylenglycol-200 |
| PPG-600 | Polypropylenglycol-600 |
| Polyol Z | trifunktionelles hochreaktives Polyetherpolyol mit primären Hydroxylendgruppen (OH-Zahl=35) |

### Testsystem 1:

**Tabelle III: Zusammensetzung des Testsystems 1 (ohne Wasserzusatz)**

| *Komponente* | *Gewichtsteile* |
|---|---|
| Polyol Z | 50 |
| PEG-200 | 25 |
| PPG-600 | 25 |

### Vorgehensweise bei zur Durchführung des Separationstests:

100 g der Polyolmischung (Verhältnis der Polyole wie in Tabelle III angegeben) werden in einem 180 ml Becher gemischt. Es wird die jeweils in Tabelle IV angegebene Menge des Vermittleradditivs zugesetzt. Hiernach wird das Gemisch 30 Sekunden mit einem Dissolver (Typ Pendraulik LD 50, Zahnscheibe: 40 mm Durchmesser, 930 Umdrehungen pro Minute) homogenisiert und im Anschluss in ein zylinderförmiges, verschließbares 100 ml-Glasgefäß (Durchmesser: 3,5 cm, Höhe: 14 cm) überführt.

Die Lagerung erfolgt bei 20 °C im verschlossenen Gefäß. Nach bestimmten Zeitspannen wird das Gemisch visuell auf einsetzende Separation überprüft.

**Tabelle IV: Separationsergebnisse in Testsystem 1**

| *Zugesetzter Verträglichkeitsvermittler* | *Menge des Verträglichkeitsvermittlers** | *Beobachtete beginnende Separation nach* ... |
|---|---|---|
| Nullprobe (kein Additiv) | 0 g | 19 h |
| A | 2,0 g | 30 h |
| B | 2,0 g | 30 h |
| C | 2,0 g | 41 h |
| D | 2,0 g | 29 h |
| E | 2,0 g | 59 h |
| F | 2,0 g | 88 h |
| G | 2,0 g | 62 h |
| H | 2,0 g | 86 h |
| I | 2,0 g | 89 h |
| J | 2,0 g | 93 h |
| K | 2,0 g | 91 h |
| L | 2,0 g | 86 h |
| M | 2,0 g | 86 h |
| N | 2,0 g | 42 h |
| O | 2,0 g | 42 h |
| P | 2,0 g | 91 h |
| Q | 2,0 g | 91 h |
| R | 2,0 g | 41 h |
| S | 2,0 g | 88 h |
| T | 2,0 g | 89 h |
| U | 2,0 g | 89 h |
| Vergleichsbeispiel | 2,8 g | 27 h |

| | | |
|---|---|---|
| *) Eingesetze Menge der aus der Herstellung des jeweiligen Verträglichkeitsvermittlers erhaltenen Lösung; daher wurde bei allen 70%-igen Proben 2,0 g eingesetzt (2,0 g der Lösung enthalten 1,4 g der Wirksubstanz) und bei der 50%-igen Probe entsprechend 2,8 g (enhaltend ebenfalls 1,4 g der Wirksubstanz) | | |

### Testsystem 2:

**Tabelle V: Zusammensetzung des Testsystems 2 (mit Wasserzusatz)**

| *Komponente* | *Gewichtsteile* |
|---|---|
| Polyol Z | 50 |
| PEG-200 | 25 |
| PPG-600 | 25 |
| Wasser | 3 |

### Vorgehensweise bei zur Durchführung des Separationstests:

100 g der Polyolmischung (Verhältnis der Polyole wie in Tabelle V angegeben) und 3 g Wasser werden in einem 180 ml Becher gemischt. Es wird die jeweils in Tabelle VI angegebene Menge des Vermittleradditivs zugesetzt. Hiernach wird das Gemisch 30 Sekunden mit einem Dissolver (Typ Pendraulik LD 50, Zahnscheibe: 40 mm Durchmesser, 930 Umdrehungen pro Minute) homogenisiert und im Anschluss in ein zylinderförmiges, verschließbares 100 ml-Glasgefäß (Durchmesser: 3,5 cm, Höhe: 14 cm) überführt.

Die Lagerung erfolgt bei 20 °C im verschlossenen Gefäß. Nach bestimmten Zeitspannen wird das Gemisch visuell auf einsetzende Separation überprüft.

**Tabelle VI: Separationsergebnisse in Testsystem 2**

| *Zugesetzter Verträglichkeitsvermittler* | *Menge des Verträglichkeitsvermittlers** | *Beobachtete beginnende Separation nach ...* |
|---|---|---|
| Nullprobe (kein Additiv) | 0 g | 2 h |
| A | 2,0 g | 10 h |
| B | 2,0 g | 19 h |
| C | 2,0 g | 54 h |
| D | 2,0 g | 26 h |
| E | 2,0 g | 53 h |
| F | 2,0 g | 54 h |
| G | 2,0 g | 50 h |
| H | 2,0 g | 49 h |
| I | 2,0 g | 51 h |
| J | 2,0 g | 49 h |
| K | 2,0 g | 40 h |
| L | 2,0 g | 62 h |
| M | 2,0 g | 63 h |
| N | 2,0 g | 25 h |
| O | 2,0 g | 26 h |
| P | 2,0 g | 50 h |
| Q | 2,0 g | 63 h |
| R | 2,0 g | 19 h |
| S | 2,0 g | 62 h |
| T | 2,0 g | 54 h |
| U | 2,0 g | 53 h |
| Vergleichsbeispiel | 2,8 g | 10 h |

| | | |
|---|---|---|
| *) Eingesetze Menge der aus der Herstellung des jeweiligen Verträglichkeitsvermittlers erhaltenen Lösung; daher wurde bei allen 70%-igen Proben 2,0 g eingesetzt (2,0 g der Lösung enthalten 1,4 g der Wirksubstanz) und bei der 50%-igen Probe entsprechend 2,8 g (enhaltend ebenfalls 1,4 g der Wirksubstanz) | | |

Der Vergleich des Testsystems 2 mit dem Testsystem 1 zeigt, dass die Entmischungsgeschwindigkeit in Gegenwart von Wasser verändert wird, dass unabhängig davon aber die Entmischungsdauer von Proben, welche das Additiv enthalten, gegenüber der Nullprobe deutlich verlängert wird.

## Patentansprüche

1. Eine lagerstabile Einphasigkeit aufweisende, flüssige Zusammensetzung umfassend
(1) 1 bis 99 Gew.% einer isocyanatreaktiven Polyol-Komponente,
(2) 1 bis 99 Gew. % wenigstens einer weiteren mit der Polyol-Komponente (1) unverträglichen, isocyanatreaktiven Polyol-Komponente,
(3) 0 bis 45 Gew.% wenigstens einer weiteren flüssigen Komponente aus der Gruppe der Zusatz- und/oder Hilfsstoffe und
(4) als Vermittleradditiv 0,1 bis 10 Gew.% wenigstens ein, die Einphasigkeit zwischen den Polyol-Komponenten (1) und (2), und der ggf. vorhandenen Komponente (3) bewirkendes Copolymeres,
wobei die Gew.% der Komponenten (1) bis (4) jeweils bezogen sind auf 100 Gew.% der Zusammensetzung und die Zusammensetzung immer 100 Gew.% ergeben und die Summe der Anteile der Komponenten (1) und (2) immer wenigstens 50 Gew.% der Zusammensetzung betragen muss und
wobei das Copolymere (4) die folgenden Struktureinheiten I bis VII umfassen kann und aus wenigstens einer der Struktureinheiten I bis III, die keine sauren funktionellen Gruppen aufweisen, und aus wenigstens einer der Struktureinheiten IV bis VII, die wenigstens eine saure funktionelle Gruppe aufweisen, aufgebaut ist: 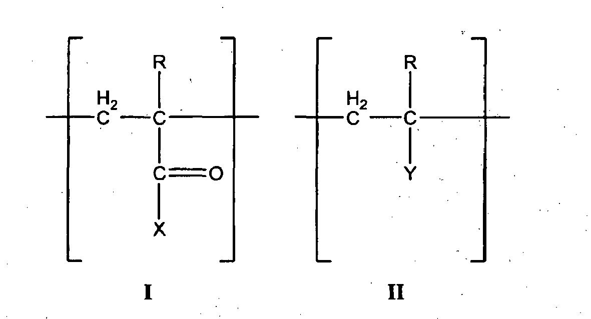 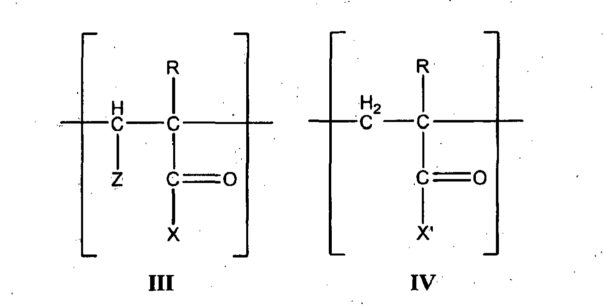 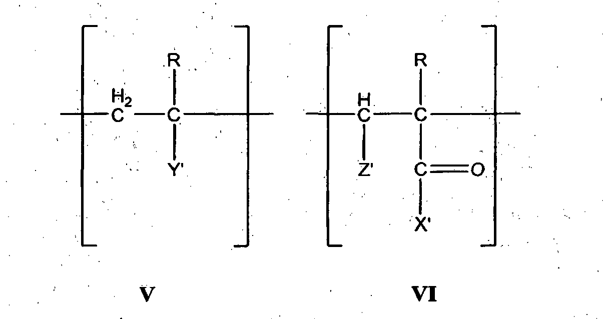 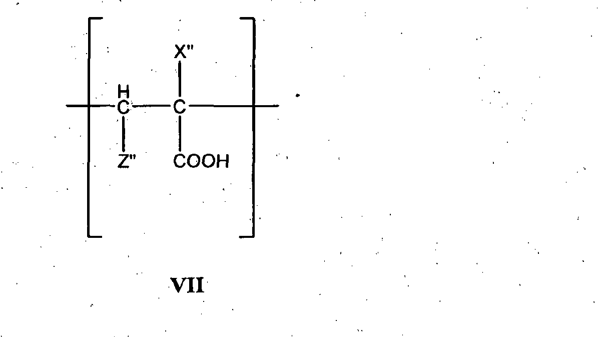 worin
R, gleich oder verschieden, für Wasserstoff oder einen ggf. verzweigten Alkylrest mit 1-5 C-Atomen steht,
X, gleich oder verschieden, für eine -OR¹, eine 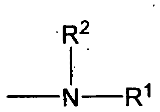 oder eine -NH₂ Gruppe steht, worin
R¹, gleich oder verschieden, für einen ggf. verzweigten Alkylrest mit 1-12 C-Atomen, einen ggf. verzweigten Alkenylrest mit 1-12 C-Atomen, der ggf. funktionellen Gruppen mit Ausnahme saurer funktioneller Gruppen aufweisen kann, einen Cycloalkylrest mit 4-10 C-Atomen, einen aromatischen Rest mit 6-20 C-Atomen, wobei jeder dieser Reste ggfs. auch substituiert sein kann, aber keine saure funktionelle Gruppe aufweist, einen Polyether-Rest oder Polyester-Rest oder einen Polyether/Polyester-Rest steht, der jeweils keine saure Gruppen aufweist,
R2, gleich oder verschieden, für Wasserstoff steht oder die Bedeutung von R¹ hat,
Y für einen ggfs. substituierten, aromatischen, ggfs. wenigstens ein Heteroatom als Ringglied aufweisenden Rest mit 4-12 C-Atomen, einen Lactam-Rest mit 4-8 C-Atomen, einen über eine -O- bzw. 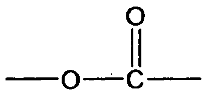 -Brücke verbundenen Polyether- bzw. Polyester-Rest oder eine 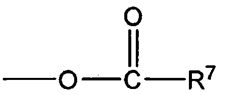 -Gruppe steht, worin
R⁷ für einen Alkylrest mit 1-6 C-Atomen oder einen Cycloalkylrest mit 4-10 C-Atomen steht, wobei jeder dieser Reste mit funktionellen Gruppen mit Ausnahme saurer funktioneller Gruppen substituiert sein kann,
Z für eine -COOR¹ Gruppe, worin R¹ die vorstehend angegebene Bedeutung hat, oder
Z zusammen mit der Gruppe 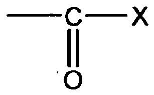 mit X in der Bedeutung einer Gruppe 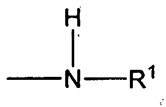 oder -NH₂ eine cyclische Imidgruppe bildet, deren Stickstoff ggf. mit einem Rest R¹ mit der vorstehend angegebenen Bedeutung substituiert sein kann,
X', gleich oder verschieden, für eine -OH-Gruppe, die ggf. als eine durch Versalzung mit einer der nachstehend aufgeführten, zur Versalzung eingesetzten, vorzugsweise organischen, basischen Verbindungen (5) versalzte Gruppe vorliegt, oder für eine -OR¹¹ Gruppe oder eine Gruppe 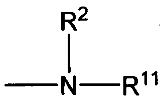 steht, worin
R¹¹, gleich oder verschieden, für einen ggf. verzweigten Alkylrest mit 1-20 C-Atomen, einen ggf. verzweigten Alkenylrest mit 1-20 C-Atomen, einen Cycloalkylrest mit 4-10 C-Atomen, einen, aromatischen Rest, wobei jeder dieser Reste neben wenigstens einer der nachstehend aufgeführten Säuregruppen ggfs. noch weiter substituiert sein kann,
und R² die vorstehend genannte Bedeutung hat,
einen Polyether-Rest, einen Polyester-Rest oder einen Polyether/Polyester-Rest steht,
wobei jeder dieser Reste mindestens eine carbonsaure, sulfonsaure, phosphonsaure und/oder phosphorsaure Gruppe aufweist, die ggf. durch Versalzung mit einer der nachstehend aufgeführten, zur Versalzung eingesetzten, vorzugsweise organischen, basischen Verbindungen (5) als versalzte Gruppe vorliegt;
Y' für eine Phosphonsäuregruppe, Phosphorsäuregruppe, für ein lineares oder verzweigtes aliphatisches Radikal mit 1 bis 8 C-Atomen, für ein ggf. Heteroatome aufweisendes, aromatisches Radikal mit mindestens 5 Ringgliedern oder für ein gesättigtes oder ungesättigtes, ggf. Heteroatome aufweisendes, cycloaliphatisches Radikal mit mindestens 5 Ringgliedern steht, wobei jedes dieser Radikale mindestens eine carbonsaure, sulfonsaure, phosphonsaure und/oder phosphorsaure Gruppe aufweist, wobei die saure Gruppe ggf. durch Versalzung mit einer der nachstehend aufgeführten, zur Versalzung eingesetzten, vorzugsweise organischen, basischen Verbindungen (5) als versalzte Gruppe vorliegt oder für einen über eine -O- bzw. 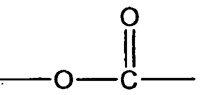 -Brücke verbundenen Polyether- bzw. Polyester-Rest oder eine 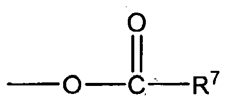 -Gruppe steht, worin
R⁷ für einen ggfs. Substituierten, verzweigten oder unverzweigten Alkylrest mit 1-6 C-Atomen oder einen ggfs. substituierten Cycloalkylrest mit 4-10 C-Atomen steht, wobei jeder der Polyether- bzw. Polyester-Reste bzw. jeder der Reste R⁷mindestens eine carbonsaure, sulfonsaure, phosphonsaure und/oder phosphorsauren Gruppe aufweist, die ggf. durch Versalzung mit einer der nachstehend aufgeführten, zur Versalzung eingesetzten, vorzugsweise organischen, basischen Verbindungen (5) als versalzte Gruppe vorliegt;
Z', gleich oder verschieden von X', für eine Gruppierung mit der Bedeutung von X', für eine -COOH-Gruppe oder für eine -COOR¹-Gruppe oder eine-COOR¹¹-Gruppe steht, worin R¹ bzw. -R¹¹, gleich oder verschieden, die vorstehend angegebene Bedeutung haben,
Z" für Wasserstoff, einen ggf. verzweigten Alkylrest mit 1-10 C-Atomen oder einen Arylrest mit 6-20 C-Atomen steht, wobei jeder dieser Reste mit einer Carboxylgruppe substituiert sein kann,
X" gleich oder verschieden von Z", die Bedeutung von Z" hat, wobei entweder nur Z" oder X" die Bedeutung von Wasserstoff haben kann,
wobei im Copolymeren (4) das molare Verhältnis von sauren funktionellen Gruppen zu ggf. vorhandenen N-haltigen, basischen Gruppen und/oder entsprechenden quarternierten Gruppen des unversalzten Copolymeren (4) wenigens 5:1 beträgt, und
worin die Struktureinheiten IV bis VII zumindest teilweise als mit mindestens einer vorzugsweise oligomeren, wenigstens eine basische Gruppe aufweisenden, vorzugsweise organischen Verbindung (5) als Versalzungsverbindung umgesetzt in versalzener Form vorliegen.

2. Eine Zusammensetzung nach Anspruch 1, **dadurch gekennzeichnet, dass** die Polyolkomponente (1) wenigstens ein kurzkettiges Polyol, vorzugsweise ein aliphatisches Polyol mit 2 - 8 C-Atomen und mindestens zwei Hydroxylgruppen, oder wenigstens ein Polyetherpolyol, Polyesterpolyol und/oder ein Polyether-Polyesterpolyol jeweils mit wenigstens zwei endständigen Hydroxylgruppen ist, und die Polyolkomponente (2), verschieden von der Polyolkomponente (1), wenigstens ein Poiyetherpolyol, wenigstens ein Polyesterpolyol, wenigstens ein Polybutadien-Polyol und/oder wenigstens ein Polyether-Polyester-Polyol jeweils mit wenigstens zwei endständigen Hydroxygruppen ist.

3. Eine Zusammensetzung nach einem der Ansprüche 1 oder 2, **dadurch gekennzeichnet, dass** in den Struktureinheiten I-VII
R, gleich oder verschieden, für Wasserstoff, einen Methyl- oder Ethyl-Rest steht,
X, gleich oder verschieden, für eine -NH-R¹ Gruppe oder eine -OR¹ Gruppe steht, worin R¹, gleich oder verschieden, für einen ggf. verzweigten Alkylrest mit 1 bis 8 C-Atomen, einen Benzylrest, einen ggf. verzweigten Alkylenrest mit 1 bis 8 C-Atomen, ggf. substituiert mit einer vorzugsweise als Endgruppe vorliegenden OH-Gruppe oder einen Polyalkylenoxid-Rest steht, wobei jeder dieser Reste keine sauren funktionellen Gruppen aufweist,
Y für einen ggfs. substituierten Phenyl-, Naphtyl-, Pyrrolidon-Rest, einen ε-Caprolactam Restreinen über eine -O- Brücke verbundenen Polyalkylenoxid- oder einen Acetat-Rest steht, wobei jeder dieser Reste keine sauren funktionellen Gruppen aufweist,
Z für eine -COOR¹-Gruppe steht, worin R¹, gleich oder verschieden, die vor stehend angegebene Bedeutung hat oder
Z zusammen mit der Gruppe 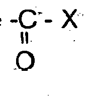 mit X in der Bedeutung einer Gruppe 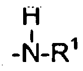 eine cyclische Imidgruppierung bildet, deren Stickstoff mit einem Rest R¹, gleich oder verschieden, mit der vorstehend angegebenen Bedeutung substituiert ist,
X', gleich oder verschieden, für eine -OH-Gruppe, die ggf. als eine durch Versalzung mit wenigstens einer der nachstehend angegebenen, vorzugsweise organsichen, basischen Verbindungen (5) versalzte Gruppe vorliegt, oder
für eine -OR¹¹ Gruppe steht, worin
R¹¹ für einen ggf. verzweigten Alkylrest oder Alkylenrest mit 1 bis 16 C Atomen steht, der mindestens einer carbonsauren, sulfonsauren, phosphonsauren und/oder phosphorsauren Gruppe aufweist, die ggf. durch Versalzung mit wenigstens einer der nachstehend aufgeführten, vorzugsweise organischen, basischen Verbindungen (5) als versalzte Gruppe vorliegt,
Y' für eine Phosphonsäuregruppe, Phosphorsäuregruppe, für ein lineares oder verzweigtes aliphatisches Radikal mit 1 bis 8 C-Atomen oder aromatisches Radikal mit wenigstens 6-C-Atomen steht, wobei jedes Radikal mindestens eine carbonsaure, sulfonsaure, phosphonsaure und/oder phosphorsauren Gruppe aufweist, die ggf. durch Versalzung mit wenigstens einer der nachstehend aufgeführten, vorzugsweise organischen, basischen Verbindungen (5) als versalzte Gruppe vorliegt,
Z', gleich oder verschieden von X', für eine Gruppierung mit der Bedeutung von X', für eine -COOH-Gruppe oder für eine -COOR¹-Gruppe steht, worin R¹, gleich oder verschieden, die vorstehend angegebene Bedeutung hat,
Z" für Wasserstoff, einen ggf. verzweigten Alkylrest mit 1-6 C-Atomen oder einen Arylrest mit 6-10 C-Atomen steht, wobei jeder der Reste mit einer Carboxylgruppe substituiert sein kann,
X", gleich oder verschieden von Z", die Bedeutung von Z" hat, wobei entweder nur Z" oder nur X" die Bedeutung von Wasserstoff haben kann,
worin die Struktureinheiten IV bis VII zumindest teilweise als mit mindestens einer vorzugsweise oligomeren, wenigstens eine basische Gruppe aufweisenden, vorzugsweise organischen Verbindung (5) als Versalzungsverbindung umgesetzt in versalzter Form vorliegen.

4. Eine Zusammensetzung nach einem der Ansprüche 1 - 3 **dadurch gekennzeichnet, dass** im Copolymer (4) das molare Verhältnis von sauren funktionellen Gruppen zu ggf. vorhandenen, N-haltigen, basischen Gruppen und/oder entsprechenden quarternierten Gruppen des unversalzten Copolymeren (4) wenigstens 10:1, vorzugsweise wenigstens 20:1 beträgt.

5. Eine Zusammensetzung nach einem der Ansprüche 1 bis 4, **dadurch gekennzeichnet, dass** der Anteil der Struktureinheiten IV-VI vor einer Versalzung von 5 bis 95 Gew.%, bevorzugt 15 bis 60 Gew.%, bezogen auf das Gesamtgewicht der Struktureinheiten I - VII des Copolymeren (4), beträgt, und das Copolymere (4) in unversalzter Form ein zahlengemitteltes Molekulargewicht Mn von 600 bis 250.000, vorzugsweise 800 bis 20.000, besonders bevorzugt 1000 bis 10.000 g/mol aufweist.

6. Eine Zusammensetzung nach einem der Ansprüche 1 bis 5, **dadurch gekennzeichnet, dass** das Copolymere (4) ein strukturiertes Copolymeres ist, das vorzugsweise einen blockartigen oder gradientenartigen, einen ggf. verzweigten oder sternförmigen Aufbau der copolymerisierten Struktureinheiten aufweist, der ggfs. Kammstrukturen umfasst.

7. Eine Zusammensetzung nach Anspruch 6, **dadurch gekennzeichnet, dass** das Copolymere (4) ein Blockcopolymer, vorzugsweise ein Diblock- oder Triblock-Copolymer mit ggf. gradientenartigen Übergängen ist, welches ggf. auch Verzweigungsstellen in der Polymerkette aufweist und bei welchem sich in zwei benachbarten Blöcken der Anteil der Struktureinheiten IV-VII um mindestens 5 Gew.%, bezogen auf die Gesamtmenge des jeweiligen Blocks, voneinander unterscheidet.

8. Eine Zusammensetzung nach einem der Ansprüche 1 bis 7, **dadurch gekennzeichnet, dass** das Copolymere (4) durch eine kontrollierte radikalische oder eine ionische Polymerisation hergestellt worden ist.

9. Eine Zusammensetzung nach einem der Ansprüche 1- 8, **dadurch gekennzeichnet, dass** die Struktureinheiten I-III des Copolymeren (4) durch Polymerisation von ethylenisch ungesättigten Monomeren ausgewählt aus der Gruppe umfassend (Meth)acrylsäureester, die ggfs. funktionelle Gruppen, wie OH-, Halogen-, Lacton- und/oder Epoxy-Gruppen aufweisen oder sich von Polyethern ableiten, ggf. substituierte (Meth)acrylsäureamide, ggfs. substituiertes Styrol, Maleinsäure-anhydrid und -Diester, Maleinimide, Vinylgruppen aufweisende, nicht basische, cycloaliphatische Heterocyclen mit wenigstens einem N-Atom als Ringglied, Vinylester von Carbonsäuren, wobei keines der Monomeren eine saure funktionelle Gruppe aufweist, erhalten worden sind.

10. Eine Zusammensetzung nach einem der Ansprüche 1-9 **dadurch gekennzeichnet, dass** die Struktureinheiten IV-VII des Copolymeren (4) durch Polymerisation von ethylenisch ungesättigten Monomeren ausgewählt aus der Gruppe umfassend (i) ethylenisch ungesättigten, aliphatischen Monomeren, die saure funktionelle Gruppen aufweisen, und (ii) Monomere, die eine C=C-Doppelbindung und wenigstens eine deprotonierbare Gruppe aufweisen und vorzugsweise aromatische Reste enthalten, vorzugsweise von ethylenischungesättigten Monomeren, die mindestens eine Carbonsäure-, Phosphonsäure-, Phosphorsäure- und/oder Sulfonsäure-Gruppe aufweisen, hergestellt worden sind.

11. Eine Zusammensetzung nach Anspruch 1 - 10 , **dadurch gekennzeichnet, dass** als basische Verbindung (5) aliphatische und aromatische primäre, sekundäre und tertiäre Amine, vorzugsweise aliphatische Amine mit 1-24 C-Atomen, cycloaliphatische Amine mit 4 - 20 C-Atomen, aromatische Amine mit 6 - 24 C-Atomen, die jeweils gegebenenfalls mit Hydroxygruppen und/oder Alkoxygruppen substituiert sein können und/oder wenigstens ein mindestens eine Amino-Endgruppe aufweisender, vorzugsweise wenigstens oligomeren Polyether basierend auf Alkylenoxid, vorzugsweise auf Ethylenoxid und/oder Propylenoxid und/oder ggf. Butylenoxid, Styroloxid oder Tetrahydrofuran und/oder wenigstens eine, vorzugsweise zumindest oligomere Verbindung ausgewählt aus der Gruppe der alkoxylierten, gesättigten oder ungesättigten primären und sekundären Amine mit 1-24 C-Atomen eingesetzt wurde.

12. Eine Zusammensetzung nach einem der Ansprüche 1 bis 11, **dadurch gekennzeichnet, dass** das Copolymere in flüssiger Form vorliegt.

13. Eine Zusammensetzung nach einem der Ansprüche 1 bis 12, **dadurch gekennzeichnet, dass** mindestens 5 mol % , vorzugsweise mindestens 20 mol % , besonders bevorzugt mindestens 60 mol % der sauren funktionellen Gruppen aufweisenden Struktureinheiten IV - VII in versalzter Form vorliegen.

14. Eine Zusammensetzung nach einem der Ansprüche 1 bis 13, **dadurch gekennzeichnet, dass** der Anteil der Komponente (1) von 10 bis 90 Gew.%, der Anteil der Komponente (2) von 10 bis 90 Gew.%, der Anteil der Komponente (3) von 0,1 bis 25 Gew.% und der Anteil des Copolymeren (4) von 0,25 bis 7,5 Gew.%, vorzugsweise 0,5 bis 4 Gew.%, jeweils bezogen auf 100 Gew.% der Zusammensetzung beträgt, wobei die Gesamtmenge der Zusammensetzung immer 100 Gew.% ergeben muss und der Anteil der Komponenten (1) bis (4) wenigstens 80 Gew. %, bevorzugt mindestens 95 Gew.%, beträgt.

15. Eine Verwendung einer Zusammensetzung gemäß einem der Ansprüche 1 bis 14 ggf. nach Zugabe wenigstens eines weiteren Hilfs- und Zusatzstoffes in fester Form ausgewählt aus der Gruppe umfassend Flammschutzmittel, Antistatika, Pigmente und organische oder anorganische Füllstoffe, ggf. in Faserform zur Herstellung von ungeschäumten oder geschäumten Polyurethanen

16. Ein geschäumter oder ungeschäumter Polyurethanartikel erhältlich durch Umsetzung einer Zusammensetzung gemäß einem der Ansprüche 1 bis 15 mit wenigstens einer organischen Polyisocyanatkomponente.

## Claims

1. A liquid composition being storage-stable monophasic comprising
(1) 1 to 99 wt% of an isocyanate-reactive polyol component,
(2) 1 to 99 wt% of at least one further isocyanate-reactive polyol component, this polyol component being incompatible with the polyol component (1),
(3) 0 to 45 wt% of at least one further liquid component from the group of additives and/or auxiliary agents, and
(4) as compatibilizer additive agent from 0.1 to 10 wt% of at least one copolymer effecting that the polyol components (1) and (2) and the optionally present component (3) are monophasical,
wherein the wt% of components (1) to (4) are all based on 100 wt% of the composition and the composition must always produce 100 wt% and the sum total of components (1) and (2) must always amount to at least 50 wt% of the composition, and
wherein the copolymer (4) may comprise the following structural units I to VII and is built of at least one of the structural units I to III, which contain no acidic functional groups, and of at least one of the structural units IV to VII, which contain at least one acidic functional group: 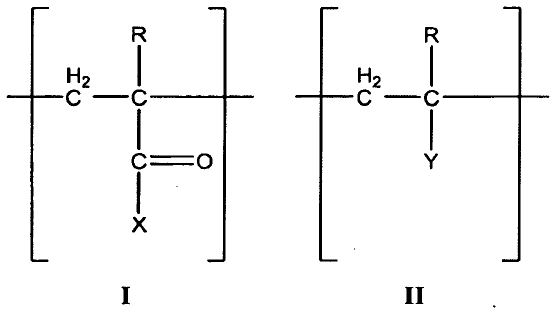 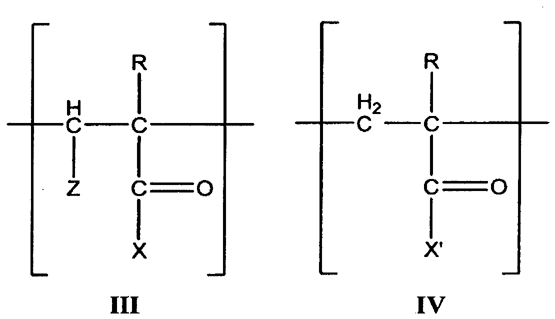 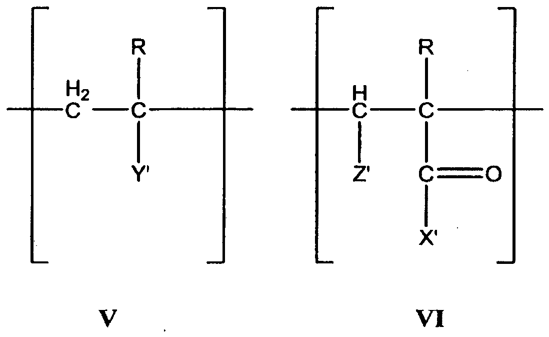 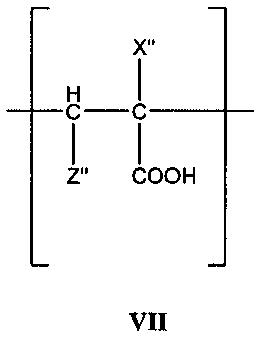 where
R, which is the same or different in each occurrence, represents hydrogen or an optionally branched alkyl moiety of 1-5 carbon atoms,
X, which is the same or different in each occurrence, represents an -OR¹ group, an 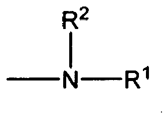 group or an -NH₂ group, where
R¹, which is the same or different in each occurrence, represents an optionally branched alkyl moiety of 1-12 carbon atoms, an optionally branched alkenyl moiety of 1-12 carbon atoms, which optionally may contain functional groups with the exception of acidic functional groups, a cycloalkyl moiety of 4-10 carbon atoms, an aromatic moiety of 6-20 carbon atoms, wherein each of these moieties may optionally also be substituted, but does not contain an acidic functional group, a polyether moiety or a polyester moiety or a polyether/polyester moiety, which each does not contain any acidic groups,
R², which is the same or different in each occurrence, represents hydrogen or has the meaning of R¹.
Y represents an optionally substituted, aromatic moiety of 4-12 carbon atoms which optionally has at least one heteroatom as ring member, a lactam moiety of 4-8 carbon atoms, a polyether or polyester moiety attached via an -O- or 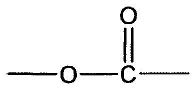 bridge, or an 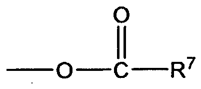 group, where
R⁷ represents an alkyl moiety of 1-6 carbon atoms or a cycloalkyl moiety of 4-10 carbon atoms, wherein each of these moieties may be substituted with functional groups with the exception of acidic functional groups,
Z represents a -COOR¹ group, where R¹ is as defined above, or
Z combines with the 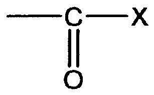 group where X is an 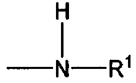 or -NH₂ group to form a cyclic imide group whose nitrogen may optionally be substituted with an R¹ moiety as defined above,
X', which is the same or different in each occurrence, represents an -OH group which is optionally present as a group salted by salting with one of the hereinafter recited, preferably organic, basic compounds (5) used for salting, or represents an -OR¹¹ group or a 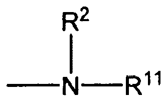 group, where
R¹¹, which is the same or different in each occurrence, represents an optionally branched alkyl moiety of 1-20 carbon atoms, an optionally branched alkenyl moiety of 1-20 carbon atoms, a cycloalkyl moiety of 4-10 carbon atoms, an aromatic moiety, wherein each of these moieties in addition to at least one of the hereinafter recited acid groups may optionally be further substituted,
and R² is as defined above,
a polyether moiety, a polyester moiety or a polyether/polyester moiety,
wherein each of these moieties contains at least one carboxylic, sulfonic, phosphonic and/or phosphoric acid group which optionally by salting with one of the hereinafter recited, preferably organic, basic compounds (5) used for salting is present as salted group;
Y' represents a phosphonic acid group, phosphoric acid group, represents a linear or branched aliphatic radical of 1 to 8 carbon atoms, represents an aromatic radical of at least 5 ring members which optionally contains heteroatoms, or represents a saturated or unsaturated cycloaliphatic radical of at least 5 ring members which optionally contains heteroatoms, wherein each of these radicals contains at least one carboxylic, sulfonic, phosphonic and/or phosphoric acid group, wherein the acidic group is optionally through salting with one of the hereinafter recited, preferably organic, basic compounds (5) used for salting present as salted group, or represents a polyether or polyester moiety attached via an -O- or 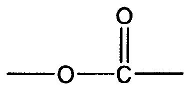 bridge or a 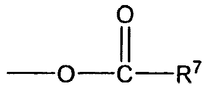 group, where
R⁷ represents an optionally substituted branched or unbranched alkyl moiety of 1-6 carbon atoms or an optionally substituted cycloalkyl moiety of 4-10 carbon atoms, wherein each of the polyether or polyester moieties or each of the R⁷ moieties contains at least one carboxylic, sulfonic, phosphonic and/or phosphoric acid group which optionally by salting with one of the hereinafter recited, preferably organic, basic compounds (5) used for salting is present as salted group;
Z', which is the same as or different from X', represents a grouping having the meaning of X', represents a -COOH group or represents a -COOR¹ group or a -COOR¹¹ group, where R¹ and -R¹¹, which are the same or different, are each as defined before,
Z" represents hydrogen, an optionally branched alkyl moiety of 1-10 carbon atoms or an aryl moiety of 6-20 carbon atoms, wherein each of these moieties may be substituted with a carboxyl group,
X", which is the same as or different from Z", has the meaning of Z", in which case either only Z" or X" can have the meaning of hydrogen,
wherein the copolymer (4) has a molar ratio of acidic functional groups to optionally present N-containing, basic groups and/or corresponding quaternized groups of the unsalted copolymer (4) of at least 5:1 and
wherein the structural units IV to VII are at least partly present in salted form by reaction with at least one preferably oligomeric, preferably organic compound (5) having at least one basic group as salting compound.

2. A composition according to claim 1, **characterized in that** the polyol component (1) is at least one short-chain polyol, preferably an aliphatic polyol having 2-8 carbon atoms and at least two hydroxyl groups, or at least one polyether polyol, polyester polyol and/or a polyether-polyester polyol each with at least two terminal hydroxyl groups, and the polyol component (2) is other than the polyol component (1) and is at least one polyether polyol, at least one polyester polyol, at least one polybutadiene polyol and/or at least one polyether-polyester polyol each with at least two terminal hydroxyl groups.

3. A composition according to either claim 1 or 2, **characterized in that** in the structural units I-VII
R, which is the same or different in each occurrence, represents hydrogen, methyl or ethyl,
X, which is the same or different in each occurrence, represents an -NH-R¹ group or an -OR¹ group, where R¹, which is the same or different, represents an optionally branched alkyl moiety of 1 to 8 carbon atoms, a benzyl moiety, an optionally branched alkylene moiety of 1 to 8 carbon atoms, optionally substituted with an OH group, which is preferably present as end group, or a polyalkylene oxide moiety, wherein each of these moieties does not contain any acidic functional groups,
Y represents an optionally substituted phenyl, naphthyl or pyrrolidone moiety, an ε-caprolactam moiety, a polyalkylene oxide moiety attached via an -O- bridge or an acetate moiety, wherein each of these moieties does not contain any acidic functional groups,
Z represents a -COOR¹ group, where R¹, which is the same or different in each occurrence, is as defined above, or
Z combines with the 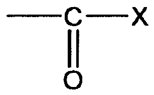 group where X is an 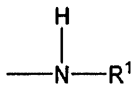 group to form a cyclic imide grouping whose nitrogen is sub- stituted with an R¹ moiety, which is the same or different, as defined above,
X', which may be the same or different in each occurrence, represents an -OH group which is optionally present as a group salted by salting with at least one of the hereinafter recited, preferably organic, basic compounds (5), or represents an -OR¹¹ group,
where
R¹¹ represents an optionally branched alkyl moiety or alkylene moiety of 1 to 16 carbon atoms, which contains at least one carboxylic, sulfonic, phosphonic and/or phosphoric acid group which optionally through salting with at least one of the hereinafter recited, preferably organic, basic compounds (5) is present as salted group,
Y' represents a phosphonic acid group, phosphoric acid group, represents a linear or branched aliphatic radical of 1 to 8 carbon atoms or aromatic radical of at least 6 carbon atoms, wherein each radical contains at least one carboxylic, sulfonic, phosphonic and/or phosphoric acid group which optionally through salting with at least one of the hereinafter recited, preferably organic, basic compounds (5) is present as salted group,
Z', which is the same as or different from X', represents a grouping having the meaning of X', represents a -COOH group or represents a -COOR¹ group , where R¹, which is the same or different, is as defined above,
Z" represents hydrogen, an optionally branched alkyl moiety of 1-6 carbon atoms or an aryl moiety of 6-10 carbon atoms, wherein each of the moieties may be substituted with a carboxyl group,
X", which is the same as or different from Z", has the meaning of Z", in which case either only Z" or only X" can have the meaning of hydrogen,
wherein the structural units IV to VII are at least partly present in salted form by reaction with at least one preferably oligomeric, preferably organic compound (5) having at least one basic group as salting compound.

4. A composition according to any one of claims 1-3, **characterized in that** in the copolymer (4) the molar ratio of acidic functional groups to optionally present N-containing, basic groups and/or corresponding quaternized groups of the unsalted copolymer (4) is at least 10:1 and preferably at least 20:1.

5. A composition according to any one of claims 1 to 4, **characterized in that** the proportion of structural units IV-VII before any salting is from 5 to 95 wt%, preferably 15 to 60 wt% and more preferably 20 to 45 wt%, based on the total weight of structural units I-VII of copolymer (4), and
the copolymer (4) has a number-averaged molecular weight in the range from 600 to 250 000, preferably in the range from 800 to 20 000 and more preferably in the range from 1000 to 10 000 g/mol in the unsalted form.

6. A composition according to any one of claims 1 to 5, **characterized in that** the copolymer (4) is a structured copolymer which preferably has a blocklike or gradientlike, an optionally branched or star-shaped arrangement of copolymerized structural units which optionally comprises comb structures.

7. A composition according to claim 6, **characterized in that** the copolymer (4) is a block copolymer, preferably a diblock or triblock copolymer with optionally gradientlike transitions, which optionally also includes branching sites in the polymer chain and of which
in two adjacent blocks the proportion of structural units IV-VII differs by at least 5 wt%, based on the total amount of the particular block.

8. A composition according to any one of claims 1 to 7, **characterized in that** the copolymer (4) is produced by a controlled free-radical polymerization or an ionic polymerization.

9. A composition according to any one of claims 1-8, **characterized in that** the structural units I-III of copolymer (4) are obtained by polymerization of ethylenically unsaturated monomers selected from the group comprising (meth)acrylic esters, which optionally have functional groups such as OH, halogen, lactone and/or epoxy groups or derived from polyethers, optionally (meth)acrylamides, optionally substituted styrene, substituted maleic anhydride and maleic acid diesters, maleimides, vinyl-containing, non-basic cycloaliphatic heterocycles having at least one nitrogen atom as ring member, and vinyl esters of carboxylic acids, wherein none of the monomers contains an acidic functional group.

10. A composition according to any one of claims 1-9, **characterized in that** the structural units IV-VII of copolymer (4) are produced by polymerization of ethylenically unsaturated monomers selected from the group comprising (i) ethylenically unsaturated aliphatic monomers having acidic functional groups, and (ii) monomers having a C=C double bond and at least one deprotonatable group and preferably containing aromatic moieties, preferably of ethylenically unsaturated monomers having at least one carboxylic acid, phosphonic acid, phosphoric acid and/or sulfonic acid group.

11. A composition according to claim 1-10, **characterized in that** basic compound (5) comprises aliphatic and aromatic primary, secondary and tertiary amines, preferably aliphatic amines of 1-24 carbon atoms, cycloaliphatic amines of 4-20 carbon atoms, aromatic amines of 6-24 carbon atoms, which may optionally each be substituted with hydroxyl groups and/or alkoxy groups, and/or at least one polyether which is based on alkylene oxide, preferably on ethylene oxide and/or propylene oxide and/or optionally butylene oxide, styrene oxide or tetrahydrofuran and has at least one amino end group and preferably is at least oligomeric, and/or at least one, preferably at least oligomeric compound selected from the group of alkoxylated, saturated or unsaturated primary and secondary amines of 1-24 carbon atoms.

12. A composition according to any one of claims 1 to 11, **characterized in that** the copolymer is in liquid form.

13. A composition according to any one of claims 1 to 12, **characterized in that** at least 5 mol%, preferably at least 20 mol% and more preferably at least 60 mol% of acidic functional groups of the structural units IV-VII having acidic functional groups are in salted form.

14. A composition according to any one of claims 1 to 13, **characterized in that** the proportion of component (1) is from 10 to 90 wt%, the proportion of component (2) is from 10 to 90 wt%, the proportion of component (3) is from 0.1 to 25 wt% and the proportion of copolymer (4) is from 0.25 to 7.5 wt%, all based on 100 wt% of the composition, wherein the total amount of the composition must always add up to 100 wt% and the proportion of components (1) to (4) is at least 80 wt% and preferably at least 95 wt%.

15. A use of a composition according to any one of claims 1 to 14 optionally after addition of at least one further additive and auxiliary agent in solid form selected from the group comprising flame retardants, antistats, pigments and organic or inorganic fillers, optionally in fiber form, for production of foamed or unfoamed polyurethanes.

16. A foamed or unfoamed polyurethane article obtainable by reacting a composition according to any one of claims 1 to 14 with at least one organic polyisocyanate component.

## Revendications

1. Composition liquide présentant un caractère monophasique stable au stockage, comprenant
(1) 1 à 99 % en poids d'un composant polyol réactif avec un isocyanate
(2) 1 à 99 % en poids d'au moins un autre composant polyol réactif avec un isocyanate, incompatible avec le composant polyol (1),
(3) 0 à 45 % en poids d'au moins un autre composant liquide choisi dans le groupe des adjuvants et/ou additifs et
(4) en tant qu'additif inducteur 0,1 à 10 % en poids d'au moins un copolymère induisant le caractère monophasique entre les composants polyol (1) et (2), et le composant (3) éventuellement présent,
les % en poids des composants (1) à (4) étant chacun par rapport à 100 % en poids de la composition et la composition devant toujours donner 100 % en poids et la somme des proportions des composants (1) et (2) devant toujours représenter au moins 50 % en poids de la composition et
le copolymère (4) pouvant comprendre les motifs structuraux I à VII suivants et étant constitué d'au moins l'un des motifs structuraux I à III, qui ne comportent pas de groupes fonctionnels acides, et d'au moins l'un des motifs structuraux IV à VII, qui comportent au moins un groupe fonctionnel acide : 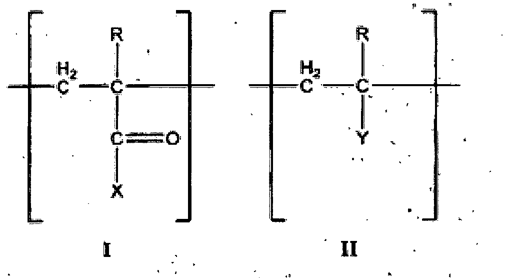 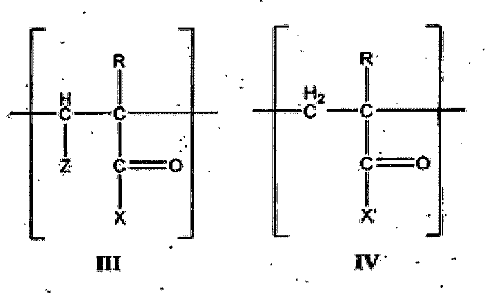 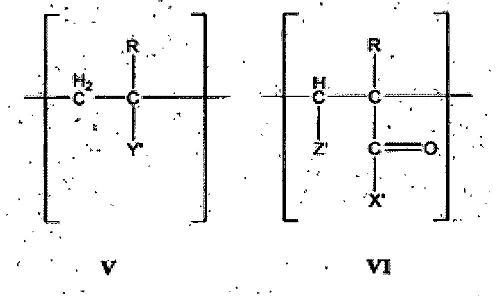 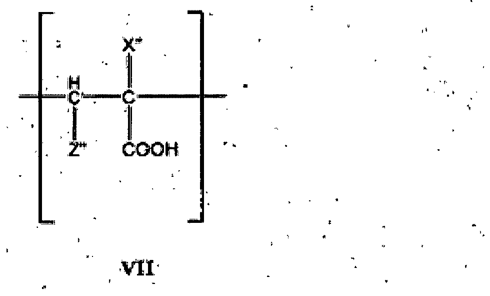 dans lesquels
R, le même ou différent, représente un atome d'hydrogène ou un radical alkyle éventuellement ramifié ayant de 1 à 5 atomes de carbone,
X, le même ou différent, représente un groupe -OR¹, un groupe 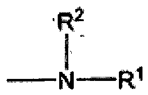 ou un groupe -NH₂, où
R¹, le même ou différent, représente un radical alkyle éventuellement ramifié ayant de 1 à 12 atomes de carbone, un radical alcényle éventuellement ramifié ayant de 1 à 12 atomes de carbone, qui peut éventuellement comporter des groupes fonctionnels à l'exclusion de groupes fonctionnels acides, un radical cycloalkyle ayant de 4 à 10 atomes de carbone, un radical aromatique ayant de 6 à 20 atomes de carbone, chacun de ces radicaux pouvant éventuellement être également substitué, mais ne comportant pas de groupe fonctionnel acide, un radical polyéther ou un radical polyester ou un radical polyéther/ polyester, qui dans chaque cas ne comporte pas de groupes acides,
R², le même ou différent, représente un atome d'hydrogène ou a la signification de R¹,
Y représente un radical aromatique ayant de 4 à 12 atomes de carbone, éventuellement substitué, comportant éventuellement au moins un hétéroatome en tant que chaînon formant le cycle,
un radical lactame ayant de 4 à 8 atomes de carbone,
un radical polyéther ou polyester relié par un pont -O- ou 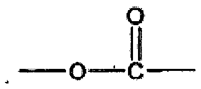 ou
un groupe 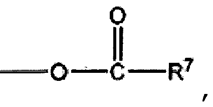 où
R⁷ représente un radical alkyle ayant de 1 à 6 atomes de carbone ou un radical cycloalkyle ayant de 4 à 10 atomes de carbone, chacun de ces radicaux pouvant être substitué par des groupes fonctionnels à l'exclusion de groupes fonctionnels acides,
Z représente un groupe -COOR¹, dans lequel R a la signification indiquée précédemment, ou
Z conjointement avec le groupe 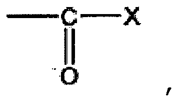 dans lequel X a la signification d'un groupe 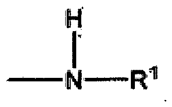 ou -NH₂, forme un groupe imido cyclique, dont l'atome d'azote peut éventuellement être substitué par un radical R¹ ayant la signification indiquée précédemment,
X', le même ou différent, représente un groupe -OH qui se trouve éventuellement sous forme d'un groupe salifié par salification par l'un des composés basiques (5), de préférence organiques, utilisés pour la salification, indiqués ci-après, ou
représente un groupe -OR¹¹ ou un groupe 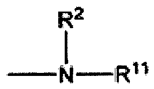 où
R¹¹, le même ou différent, représente un radical alkyle éventuellement ramifié ayant de 1 à 20 atomes de carbone, un radical alcényle éventuellement ramifié ayant de 1 à 20 atomes de carbone, un radical cycloalkyle ayant de 4 à 10 atomes de carbone, un radical aromatique, chacun de ces radicaux outre au moins l'un des groupes acides indiqués ci-après pouvant éventuellement encore être substitué davantage,
et R² a la signification indiquée précédemment,
représente un radical polyéther, un radical polyester ou un radical polyéther/polyester,
chacun de ces radicaux comportant au moins un groupe carboxy, sulfo, phosphono et/ou phosphoryle, qui se trouve éventuellement sous forme de groupe salifié par salification par l'un des composés basiques (5), de préférence organiques, utilisés pour la salification, indiqués ci-après ;
Y' représente un groupe phosphono, un groupe phosphoryle, représente un radical aliphatique linéaire ou ramifié ayant de 1 à 8 atomes de carbone, représente un radical aromatique, comportant éventuellement des hétéroatomes, à au moins 5 chaînons formant le cycle, ou représente un radical cycloaliphatique saturé ou insaturé, comportant éventuellement des hétéroatomes, à au moins 5 chaînons formant le cycle, chacun de ces radicaux comportant au moins un groupe carboxy, sulfo, phosphono et/ou phosphoryle, le groupe acide se trouvant éventuellement sous forme de groupe salifié par salification par l'un des composés basiques (5), de préférence organiques, utilisés pour la salification, indiqués ci-après ou
représente un radical polyéther ou polyester relié par un pont -O- ou 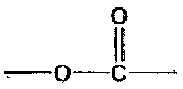 ou un groupe 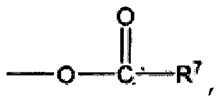 où
R⁷ représente un radical alkyle ramifié ou non ramifié, éventuellement substitué, ayant de 1 à 6 atomes de carbone ou un radical cycloalkyle éventuellement substitué ayant de 4 à 10 atomes de carbone, chacun des radicaux polyéther ou polyester ou chacun des radicaux R⁷ comportant au moins un groupe carboxy, sulfo, phosphono et/ou phosphoryle, qui se trouve éventuellement sous forme de groupe salifié par salification par l'un des composés basiques (5), de préférence organiques, utilisés pour la salification, indiqués ci-après ;
Z', identique à ou différent de X', représente un groupement ayant la signification de X'-, représente un groupe -COOH ou représente un groupe -COOR¹ ou un groupe -COOR¹¹, où R¹ ou respectivement -R¹¹, identiques ou différents, ont la signification indiquée précédemment,
Z" représente un atome d'hydrogène, un radical alkyle éventuellement ramifié ayant de 1 à 10 atomes de carbone ou un radical aryle ayant de 6 à 20 atomes de carbone, chacun de ces radicaux pouvant être substitué par un groupe carboxy,
X'', identique à ou différent de Z'', a la signification de Z'', soit seulement Z'' soit seulement X'' pouvant avoir la signification d'un atome d'hydrogène,
dans le copolymère (4) le rapport molaire des groupes fonctionnels acides aux groupes basiques azotés éventuellement présents et/ou aux groupes quaternisés correspondants du copolymère (4) non salifié valant au moins 5 : 1, et
où les motifs structuraux IV à VII se trouvent au moins en partie sous forme salifiée, en ayant réagi avec au moins un composé (5) de préférence organique, de préférence oligomère, comportant au moins un groupe basique.

2. Composition selon la revendication 1, **caractérisée en ce que** le composant polyol (1) est au moins un polyol à courte chaîne, de préférence un polyol aliphatique ayant 2 - 8 atomes de carbone et comportant au moins deux groupes hydroxy, ou au moins un polyétherpolyol, polyesterpolyol et/ou un polyéther-polyesterpolyol comportant chacun au moins deux groupes hydroxy en bout de chaîne, et le composant polyol (2), différent du composant polyol (1), est au moins un polyétherpolyol, au moins un polyesterpolyol, au moins un polybutadiène-polyol et/ou au moins un polyéther-polyester-polyol, comportant chacun au moins deux groupes hydroxy en bout de chaîne.

3. Composition selon l'une quelconque des revendications 1 et 2, **caractérisée en ce que** dans les motifs structuraux I-VII
R, le même ou différent, représente un atome d'hydrogène, un radical méthyle ou éthyle,
X, le même ou différent, représente un groupe -NH-R¹ ou un groupe -OR¹, où R¹, le même ou différent, représente un radical alkyle éventuellement ramifié ayant de 1 à 8 atomes de carbone, un radical benzyle, un radical alkylène éventuellement ramifié ayant de 1 à 8 atomes de carbone, éventuellement substitué par un groupe OH de préférence présent en tant que groupe terminal, ou un radical polyoxyalkylène, chacun de ces radicaux ne comportant pas de groupes fonctionnels acides,
Y représente un radical phényle, naphtyle, pyrrolidone, éventuellement substitué, un radical 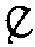 -caprolactame, un radical polyoxyalkylène relié par un pont -O-, ou un radical acétate, chacun de ces radicaux ne comportant pas de groupes fonctionnels acides,
Z représente un groupe -COOR¹, dans lequel R¹, le même ou différent, a la signification indiquée précédemment, ou
Z conjointement avec le groupe 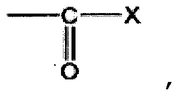 dans lequel X a la signification d'un groupe 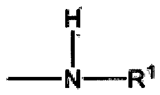 forme un groupement imido cyclique, dont l'atome d'azote est substitué par un radical R¹, le même ou différent, ayant la signification indiquée précédemment,
X', le même ou différent, représente un groupe -OH qui se trouve éventuellement sous forme d'un groupe salifié par salification par au moins l'un des composés basiques (5), de préférence organiques, indiqués ci-après, ou
représente un groupe -OR¹¹, dans lequel
R¹¹, le même ou différent, représente un radical alkyle ou un radical alkylène éventuellement ramifié ayant de 1 à 16 atomes de carbone, qui comporte au moins un groupe carboxy, sulfo, phosphono et/ou phosphoryle, qui se trouve éventuellement sous forme de groupe salifié par salification par au moins l'un des composés basiques (5), de préférence organiques, indiqués ci-après
Y' représente un groupe phosphono, un groupe phosphoryle, représente un radical aliphatique linéaire ou ramifié ayant de 1 à 8 atomes de carbone ou un radical aromatique comportant au moins 6 atomes de carbone, chaque radical comportant au moins un groupe carboxy, sulfo, phosphono et/ou phosphoryle, qui se trouve éventuellement sous forme de groupe salifié par salification par au moins l'un des composés basiques (5), de préférence organiques, indiqués ci-après,
Z', identique à ou différent de X', représente un groupement ayant la signification de X', représente un groupe -COOH ou représente un groupe -COOR¹ où R¹, le même ou différent, a la signification indiquée précédemment,
Z" représente un atome d'hydrogène, un radical alkyle éventuellement ramifié ayant de 1 à 6 atomes de carbone ou un radical aryle ayant de 6 à 10 atomes de carbone, chacun de ces radicaux pouvant être substitué par un groupe carboxy,
X" , identique à ou différent de Z" , a la signification de Z", soit seulement Z" soit seulement X'' pouvant avoir la signification d'un atome d'hydrogène,
où les motifs structuraux IV à VII se trouvent au moins en partie sous forme salifiée, ayant réagi avec au moins un composé (5) de préférence organique, de préférence oligomère, comportant au moins un groupe basique, en tant que composé de salification.

4. Composition selon l'une quelconque des revendications 1 à 3, **caractérisée en ce que** dans le copolymère (4) le rapport molaire des groupes fonctionnels acides aux groupes basiques azotés éventuellement présents et/ou groupes quaternisés correspondants du copolymère (4) non salifié vaut au moins 10 : 1, de préférence au moins 20 : 1.

5. Composition selon l'une quelconque des revendications 1 à 4, **caractérisée en ce que** la proportion des motifs structuraux IV-VII avant une salification vaut de 5 à 95 % en poids, de préférence de 15 à 60 % en poids, par rapport au poids total des motifs structuraux I - VII du copolymère (4), et le copolymère (4) sous forme non salifiée présente une masse moléculaire moyenne en nombre Mn de 600 à 250 000, de préférence de 800 à 20 000, de façon particulièrement préférée de 1 000 à 10 000 g/mole.

6. Composition selon l'une quelconque des revendications 1 à 5, **caractérisée en ce que** le copolymère (4) est un copolymère structuré qui présente de préférence une structure séquencée ou de type gradient, une structure éventuellement ramifiée ou en étoile des motifs structuraux copolymérisés, qui comprend éventuellement des structures en peigne.

7. Composition selon la revendication 6, **caractérisée en ce que** le copolymère (4) est un copolymère séquencé, de préférence un copolymère diséquencé ou triséquencé, avec éventuellement des transitions en gradient, qui éventuellement présente également des points de ramification dans la chaîne polymère et dans lequel la proportion des motifs structuraux IV-VII dans deux séquences voisines diffère entre elles d'au moins 5 % en poids, par rapport à la quantité totale de la séquence respective.

8. Composition selon l'une quelconque des revendications 1 à 7, **caractérisée en ce que** le copolymère (4) a été produit par une polymérisation radicalaire contrôlée ou une polymérisation ionique.

9. Composition selon l'une quelconque des revendications 1 à 8, **caractérisée en ce que** les motifs structuraux I-III du copolymère (4) ont été obtenus par polymérisation de monomères à insaturation éthylénique choisis dans le groupe comprenant des esters d'acide (méth)acrylique qui éventuellement comportent des groupes fonctionnels, tels que des groupes OH, halogéno, lactone et/ou époxy ou dérivent de polyéthers, des (méth)acrylamides éventuellement substitués, le styrène éventuellement substitué, l'anhydride et des diesters d'acide maléique, des maléimides, des hétérocycles cycloaliphatiques non basiques comportant au moins un atome d'azote en tant que chaînon formant le cycle, qui comportent des groupes vinyle, des esters vinyliques d'acides carboxyliques, aucun des monomères ne comportant un groupe fonctionnel acide.

10. Composition selon l'une quelconque des revendications 1 à 9, **caractérisée en ce que** les motifs structuraux IV-VII du copolymère (4) ont été obtenus par polymérisation de monomères à insaturation éthylénique choisis dans le groupe comprenant (i) des monomères aliphatiques à insaturation éthylénique qui comportent des groupes fonctionnels acides, et (ii) des Monomères qui comportent une double liaison C=C et au moins un groupe déprotonable et contiennent de préférence des radicaux aromatiques, de préférence de monomères à insaturation éthylénique qui comportent au moins un groupe carboxy, phosphono, phosphoryle et/ou sulfo.

11. Composition selon l'une quelconque des revendications 1 à 10, **caractérisée en ce qu'**on a utilisé comme composé basique (5) des amines aliphatiques et aromatiques primaires, secondaires et tertiaires, de préférence des amines aliphatiques ayant de 1 à 24 atomes de carbone, des amines cycloaliphatiques ayant de 4 à 20 atomes de carbone, des amines aromatiques ayant de 6 à 24 atomes de carbone, qui peuvent éventuellement être substituées chacune par des groupes hydroxy et/ou des groupes alcoxy et/ou au moins un polyéther de préférence au moins oligomère, comportant au moins un groupe terminal amino, à base d'oxyde d'alkylène, de préférence d'oxyde d'éthylène et/ou d'oxyde de propylène et/ou éventuellement d'oxyde de butylène, d'oxyde de styrène ou de tétrahydrofurane et/ou au moins un composé, de préférence au moins oligomère, choisi dans le groupe des amines primaires et secondaires alcoxylées, saturées ou insaturées, ayant de 1 à 24 atomes de carbone.

12. Composition selon l'une quelconque des revendications 1 à 11, **caractérisée en ce que** le copolymère se trouve sous forme liquide.

13. Composition selon l'une quelconque des revendications 1 à 12, **caractérisée en ce qu'**au moins 5 % en moles, de préférence au moins 20 % en moles, de façon particulièrement préférée au moins 60 % en moles des motifs structuraux IV - VII comportant des groupes fonctionnels acides se trouvent sous forme salifiée.

14. Composition selon l'une quelconque des revendications 1 à 13, **caractérisée en ce que** la proportion du composant (1) vaut de 10 à 90 % en poids, la proportion du composant (2) vaut de 10 à 90 % en poids, la proportion du composant (3) vaut de 0,1 à 25 % en poids et la proportion du composant (4) vaut de 0,25 à 7,5 % en poids, de préférence de 0,5 à 4 % en poids, chaque fois par rapport à 100 % en poids de la composition, la quantité totale de la composition devant toujours donner 100 % en poids et la proportion des composants (1) à (4) représentant au moins 80 % en poids, de préférence au moins 95 % en poids.

15. Utilisation d'une composition selon l'une quelconque des revendications 1 à 14, éventuellement après addition d'au moins un autre adjuvant ou additif sous forme solide, choisi dans le groupe comprenant des agents ignifuges, agents antistatiques, pigments et charges organiques ou inorganiques, éventuellement sous forme de fibres, pour la production de polyuréthanes transformés en mousse ou non transformés en mousse.

16. Article en polyuréthane transformé en mousse ou non transformé en mousse, pouvant être obtenu par mise en réaction d'une composition selon l'une quelconque des revendications 1 à 15 avec au moins un composant polyisocyanate organique.
